(19) Europäisches Patentamt
European Patent Office
Office européen des brevets

(11) EP 2 765 795 B1

(12) EUROPEAN PATENT SPECIFICATION

(45) Date of publication and mention
of the grant of the patent:
**15.08.2018 Bulletin 2018/33**

(51) Int Cl.:
*H04L 29/06* (2006.01)   *H04W 12/04* (2009.01)
*H04L 9/08* (2006.01)    *H04W 4/00* (2018.01)
*H04W 88/08* (2009.01)

(21) Application number: **12845896.5**

(22) Date of filing: **27.10.2012**

(86) International application number:
**PCT/CN2012/083633**

(87) International publication number:
**WO 2013/064041 (10.05.2013 Gazette 2013/19)**

(54) **DEVICES FOR GENERATING AN MTC GROUP KEY**

VORRICHTUNGEN ZUR ERZEUGUNG EINES MTC-GRUPPENSCHLÜSSELS

DISPOSITIFS PERMETTANT DE GÉNÉRER UNE CLÉ DE GROUPE MTC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.11.2011 CN 201110339969**

(43) Date of publication of application:
**13.08.2014 Bulletin 2014/33**

(73) Proprietor: **Huawei Technologies Co., Ltd.
Longgang District
Shenzhen, Guangdong 518129 (CN)**

(72) Inventors:
• **ZHANG, Lijia
Shenzhen
Guangdong 518129 (CN)**
• **CHEN, Jing
Shenzhen
Guangdong 518129 (CN)**
• **XU, Yixian
Shenzhen
Guangdong 518129 (CN)**

(74) Representative: **Körber, Martin Hans
Mitscherlich PartmbB
Patent- und Rechtsanwälte
Sonnenstrasse 33
80331 München (DE)**

(56) References cited:
WO-A1-2008/151540   WO-A1-2011/127804
WO-A2-2012/077999   CN-A- 101 511 082
CN-A- 102 196 436   CN-A- 102 215 474
US-A1- 2010 106 967

## Description

### TECHNICAL FIELD

The present invention relates to the communications field, and in particular, to a method and a related device for generating a group key in the communications field.

### BACKGROUND

A machine to machine (Machine to Machine, M2M) technology is an integration of wireless communication and information technologies, and means that communication may be directly performed between machines without manual intervention. There are diversified types of M2M applications, including automatic instruments, remote monitoring, industrial security, ship automation, payment systems, remote vehicle control.

There are three types of M2M, namely, machine to machine, machine to mobile phone and mobile phone to machine. In M2M, an M2M device may access a network through a long-distance connection technology and a short-distance connection technology. The involved long distance connection technologies include wireless access type technologies such as a Global System for Mobile Communications (Global System for Mobile communications, GSM), a general packet radio service (General Packet Radio Service, GPRS), and a Universal Mobile Telecommunications System (Universal Mobile Telecommunications System, UMTS). The short-distance connection technologies include 802.11b/g, blue tooth (Blue Tooth), Zigbee (Zigbee), a radio frequency identification (Radio Frequency Identification, RFID) technology and an ultra wideband (Ultra Wideband, UWB) technology. Apparently, other technologies that may be used to support M2M communication are not excluded. The M2M communication may also be referred to as machine type communication (Machine Type Communication, MTC), and the M2M device may also be referred to as an MTC device.

In the prior art, a base station builds a common physical layer, a radio link control (Radio Link Control, RLC) layer, a packet data convergence protocol (Packet Data Convergence Protocol, PDCP) layer and a media access control (Media Access Control, MAC) layer for a same group of MTC devices. After establishing a common bearer for the same group of MTC devices, each MTC device has a unique key, and a PDU unit interacting between the base station and an MTC device needs to carry an MTC device identifier to look for a corresponding key according to the identifier. Therefore, at the base station, it is required to maintain respective keys for MTC devices in the same group, which increases the operation complexity of the base station and forces the base station to maintain and manage an excessive amount of keys, thereby affecting the performance of the base station.

Document CN 101 511 082 A discloses a system comprising a user equipment UE or USIM (UMTS Subscriber Identity Module) card, as well as a serving entity that may be MME (Mobility Management Entity) or VLR (Visitor Location Register), and a home network entity that may be HSS (Visitor Location Register) or HLR, see [0077]. According to a group key update process, the MME sends a user identity request message to the UE/USIM that returns a response message comprising a group key version number KV used to identify the version of the group key GK, a group ID GID, and a cryptographic computation. The MME forwards the response message to the HSS that computes a group rekeying value EGK being a cryptographic computation. The HSS sends an IMSI and the group rekeying value EGK to the MME that sends the group rekeying value EGK to the UE/USIM.

### SUMMARY

According to a first aspect, the present invention provides a base station as defined in claim 1.

According to a second aspect, the present invention provides a mobility management entity, as specified in claim 6.

According to a third aspect, the present invention provides a machine type communication device, as specified in claim 12.

According to the foregoing technical solutions, because an MTC device and an HSS save a security key corresponding to a group ID or a service ID, a network side may generate a group key of a group to which the MTC device belongs by using the security key and a random number generated by the HSS, and send a generating parameter required for generating a group key to an MTC device in the group, so that the MTC device generates the group key by using the group key generating parameter and the security key. Therefore, MTC devices in a same group can use a same group key to perform group communication normally, and a base station only needs to maintain the same group key for the same group, thereby reducing the operation complexity of the base station, decreasing the number of keys maintained and managed by the base station, and improving the performance of the base station.

## BRIEF DESCRIPTION OF DRAWINGS

To illustrate the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a flowchart of a method for generating a group key according to an embodiment of the present invention;
FIG. 2 is a flowchart of a first example of generating a group key by using the method according to an embodiment of the present invention;
FIG. 3 is a schematic diagram of an example of generating a group authentication parameter in the first example;
FIG. 4 is a flowchart of authentication performed between an MTC device and an MME (Mobility Management Entity, mobility management entity) in the first example;
FIG. 5 is a flowchart in which an MTC device rejoins group communication from an idle state or a detached state in the first example;
FIG. 6 is a flowchart of a second example of generating a group key by using the method according to an embodiment of the present invention;
FIG. 7 is a schematic diagram of an example of generating a group authentication parameter in the second example;
FIG. 8 is a schematic diagram of another example of generating a group authentication parameter in the second example;
FIG. 9 is a flowchart of authentication performed between an MTC device and an MME in the second example;
FIG. 10 is a flowchart in which an MTC device rejoins group communication from an idle state or a detached state in the second example;
FIG. 11 is a flowchart of a third example of generating a group key by using the method according to an embodiment of the present invention;
FIG. 12 is a flowchart in which an MTC device rejoins group communication from an idle state or a detached state in the third example;
FIG. 13 is a flowchart of another method for generating a group key according to an embodiment of the present invention;
FIG. 14 is a flowchart of still another method for generating a group key according to an embodiment of the present invention;
FIG. 15 is a flowchart of yet another method for generating a group key according to an embodiment of the present invention;
FIG. 16 is a structural block diagram of a base station according to an embodiment of the present invention;
FIG. 17 is a structural block diagram of another base station according to an embodiment of the present invention;
FIG. 18 is a structural block diagram of a mobility management entity according to an embodiment of the present invention;
FIG. 19 is a structural block diagram of another mobility management entity according to an embodiment of the present invention;
FIG. 20 is a structural block diagram of a home subscriber system according to an embodiment of the present invention;
FIG. 21 is a structural block diagram of another home subscriber system according to an embodiment of the present invention;
FIG. 22 is a structural block diagram of a machine type communication device according to an embodiment of the present invention; and
FIG. 23 is a structural block diagram of another machine type communication device according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

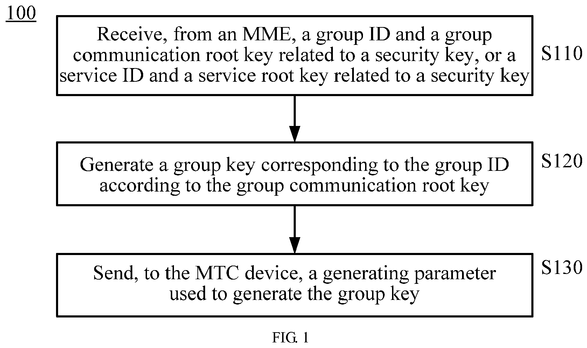

First, with reference to FIG. 1, a method 100 for generating a group key according to an embodiment of the present invention is described.

As shown in FIG. 1, the method 100 includes:

In S110, receive, from a mobility management entity MME, a group ID of a group to which a machine type communication MTC device belongs, and a group communication root key related to a security key, where the security key is corresponding to the group ID; or, receive, from the MME, a service ID of a service supported by the MTC device, and a service root key related to a security key, where the security key is corresponding to the service ID, determine, according to the service ID, the group ID of the group to which the MTC device belongs, and generate the group communication root key according to the group ID and the service root key;

In S120, generate a group key corresponding to the group ID according to the group communication root key; and

In S130, send, to the MTC device, a generating parameter used to generate the group key, so that the MTC device generates the group key according to the group key generating parameter and a security key saved in the MTC device.

For example, the method 100 may be executed by a base station. A network side may generate a group key by using a security key that is saved in an HSS (Home Subscriber System, home subscriber system) and corresponding to the group ID or the service ID, and then send, to the MTC device, a parameter that is unknown to the MTC device and among parameters required for generating the group key, so that the MTC device may also generate a group key that is the same as the group key of the network side. In this way, it may be ensured that the group key of a device side is consistent with that of the network side and group communication is normally performed. Meanwhile, because a group shares a same group key, the base station only needs to maintain the same group key for the same group, thereby reducing the operation complexity of the base station, decreasing the number of keys maintained and managed by the base station, and improving the performance of the base station. The following describes the execution of the method 100 with reference to specific examples.

In the following embodiments that use a first example, a second example or a third example in the present invention, a parameter with the word "Group" indicates a parameter related to a group, and a parameter "XXX_Group" of a group may have similar use and effect to a parameter "XXX" of an MTC device. For example, an AV_Group may have a similar generating manner and expression format to an authentication vector (Authentication Vector, AV), and the difference lies in that the AV_Group is for a group rather than for a specific MTC device.

A first example

In the first example, a group ID may be preset in an MTC device, or may be set in a USIM (Universal Subscriber Identity Module, universal subscriber identity module). When the USIM is inserted into the MTC device, the USIM becomes a part of the MTC device, so as to determine the group to which the MTC device belongs.

A group communication root key is the KeNB_Group in the following description, which is equal to a Kasme_Group generated by an HSS. The KeNB_Group has a similar function to a KeNB, and the difference lies in that the KeNB_Group is for a group, but the KeNB is for an MTC device. Other keys may be derived from the KeNB_Group.

A group key generating parameter sent to the MTC device may be a parameter required for generating the KeNB_Group, and the parameter may be some authentication parameters, and therefore may be sent to the MTC device in an authentication process. In this way, the overhead caused by separately sending the group key generating parameter to the MTC devices in the group may be avoided, and the efficiency of authentication parameter usage may be improved.

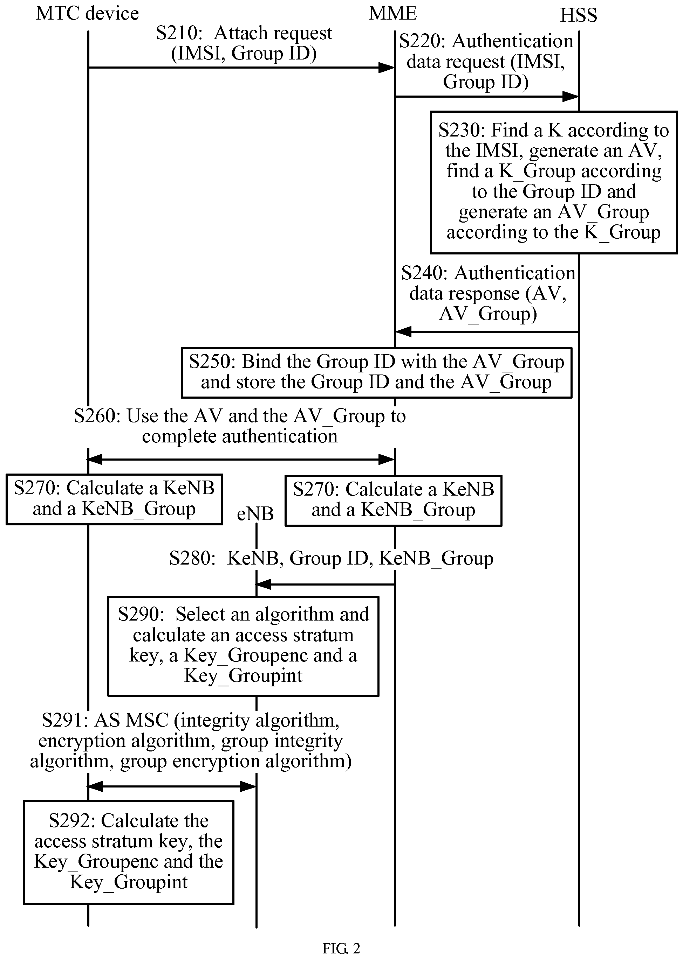

In the first example shown in FIG. 2, a USIM inserted into an MTC device saves group information such as Group ID (group ID) of a group to which the MTC device belongs and a security key K_Group corresponding to the Group ID. Apparently, a person skilled in the art may also figure out that the Group ID and the security key corresponding to the Group ID may also be directly saved in the MTC device. In addition, an HSS serving the MTC device also saves the K_Group corresponding to the Group ID.

In S210, the MTC device sends an attach request to an MME, where the request includes an IMSI of the MTC device and the Group ID of the group to which the MTC device belongs.

After the MME receives the attach request sent by the MTC device, the MME determines whether an AV_Group bound with the Group ID is saved.

When determining that the AV_Group bound with the Group ID is not saved, before S260, the MME executes the following operations:

In S220, the MME sends an authentication data request to an HSS, where the authentication data request includes the IMSI and the Group ID;

In S230, the HSS finds a corresponding K_according to the IMSI, and generates an AV according to the K, and the HSS finds a corresponding K_Group according to the Group ID, and generates an AV_Group according to the K Group;

In S240, the HSS sends the AV and the AV_Group to the MME through an authentication data response; and

In S250, the MME binds the Group ID with the AV_Group and stores the Group ID and the AV_Group.

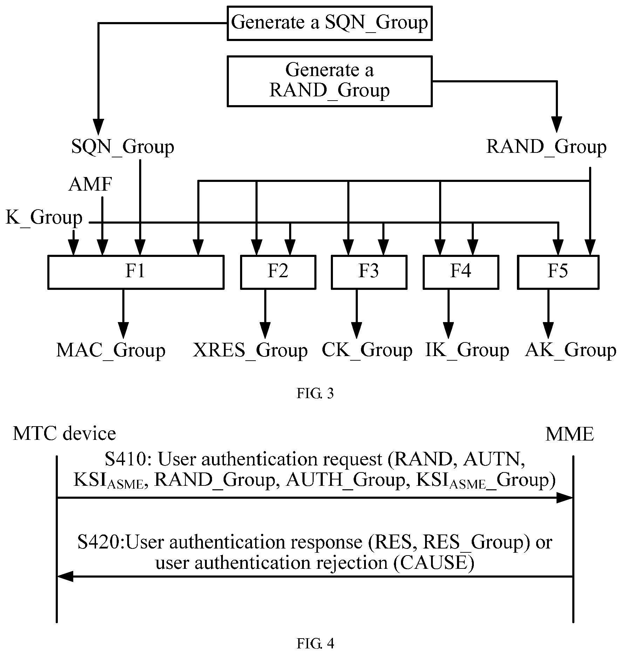

FIG. 3 shows a manner for generating an AV_Group according to a K_Group, and FIG. 3 is only an example but is not intended to limit the manner for generating an AV_Group according to a K_Group.

In FIG. 3, an HSS generates an AV_Group for a Group ID with reference to the manner for generating an AV. The involved setter AMF and the functions F1 to F5 have same meanings as in the prior art, and the difference lies in that other input parameters and generated parameters are for a group rather than for an MTC device.

The HSS generates a sequence number SQN_Group for the Group ID, and generates a random number RAND_Group for the Group ID. The K_Group, the SQN_Group, the RAND_Group and the AMF are input into each function shown in the figure to generate a MAC_Group, an XRES_Group, a CK_Group, an IK_Group and an AK_Group. Then, the following manner may be used to generate an AUTN_Group and a Kasme_Group:

$$\text{AUTN\_Group} = \text{SQN} \oplus \text{AK\_Group} \parallel \text{AMF} \parallel \text{MAC\_Group}$$

$$\text{Kasme\_Group} = \text{KDF} \left( \text{SQN} \oplus \text{AK\_Group}, \text{SN ID}, \text{IK\_Group}, \text{CK\_Group} \right)$$

where KDF is a key generating function, which may have a same calculation manner as in the prior art and may be the same as a KDF function below, and the format thereof is not limited; $\oplus$ represents an XOR calculation; and $\parallel$ represents that two physical quantities before and after the symbol are put together to form a continuous physical quantity.

After the AUTN_Group and the Kasme_Group are generated, the AV_Group may be obtained:

$$\text{AV\_Group} = \text{RAND\_Group} \parallel \text{XRES\_Group} \parallel \text{Kasme\_Group} \parallel \text{AUTN\_Group}$$

Referring back to FIG. 2, when determining that the AV_Group bound with the Group ID is saved, before S260, the MME executes the following operations:

> In S220, the MME sends an authentication data request to the HSS, where the authentication data request includes the IMSI;
> In S230, the HSS finds a corresponding K according to the IMSI, and generates an AV according to the K; and
> In S240, the HSS sends the AV to the MME. In this case, S250 does not need to be executed.

Continue the procedure in FIG. 2. In S260, the MME and the MTC device use the AV and the AV_Group to perform authentication. The authentication process is shown in FIG. 4.

In S410, the MME sends a user authentication request to the MTC device, where besides carrying RAND, AUTH, and $\text{KSI}_{\text{ASME}}$ as in the prior art to authenticate the MTC device, the request needs to further carry the RAND_Group, an AUTH_Group, a $\text{KSI}_{\text{ASME\_}}$Group in the manner described in this embodiment of the present invention to perform group authentication on the Group ID belonging to the MTC device. The meaning and use of the RAND_Group, the AUTH_Group and the $\text{KSI}_{\text{ASME\_}}$Group may be the same as the meaning and use of the RAND, the AUTH and the $\text{KSI}_{\text{ASME}}$, except that the AND_Group, the AUTH_Group and the $\text{KSI}_{\text{ASME\_}}$Group are parameters for a group, and the RAND, the AUTH and the $\text{KSI}_{\text{ASME}}$ are for an MTC device.

In S420, when the authentication is successful, the MTC device returns a user authentication response to the MME, where besides carrying RES as in the prior art to respond to device authentication, the response needs to further carry an RES_Group in the manner described in this embodiment of the present invention to respond to group authentication. In addition, if the authentication fails, the MTC device needs to send a user authentication rejection message to the MME as in the prior art, where the message carries a CAUSE parameter used to indicate a cause of the authentication failure.

Refer again to FIG. 2 and continue the procedure of FIG. 2. In S270, if the authentication is successful, the MME and the MTC device may calculate the KeNB_Group according to the AV_Group, and in this embodiment, the Kasme_Group is used as the KeNB_Group. The KeNB_Group is a group communication root key of an access stratum, and other access stratum group keys may be generated through the KeNB_Group. Although in the first example shown in FIG. 2, the MTC device and the MME jointly generate the KeNB and the KeNB_Group in S270, the MTC device may also generate the KeNB and the KeNB_Group at any moment after S260 and before S292.

In S280, the MME sends the Group ID, the KeNB and the KeNB_Group to an eNB.

In S290, the eNB selects an integrity algorithm and an encryption algorithm according to a security capability of the MTC device. If the eNB does not establish a binding related to the Group ID, the eNB selects, according to a group security capability of the MTC device, a group algorithm used to generate the group key, where the group algorithm may include a group integrity algorithm and a group encryption algorithm. The manner for selecting the group integrity algorithm and the group encryption algorithm may be similar to the manner for selecting the integrity algorithm and the encryption algorithm for the MTC device in the prior art. The group integrity algorithm and the group encryption algorithm may also be respectively similar to the integrity algorithm and the encryption algorithm in the prior art, and the difference lies in that the group integrity algorithm and the group encryption algorithm are algorithms for a group, but the integrity algorithm and the encryption algorithm are algorithms for an MTC device.

When the eNB generates a corresponding group key for a group ID to establish a binding relationship with the group ID for the first time, the eNB sets a key update count Key Count to 0, where the parameter may be used to derive and update the group key. When a PDCP Count (PDCP Count) value reaches a maximum value, the Key Count value may be added by 1. That the PDCP Count value reaches a maximum value may refer to that a hyper frame number (Hyper Frame Number, HFN) part in the PDCP Count reaches a maximum value, that is, whenever the HFN reaches a threshold, the Key Count is added by 1. In this way, when another MTC device belonging to the group ID joins group communication corresponding to the group ID for the first time, a generating parameter used to generate the group key and a key update count Key Count required for updating the group key are sent to the another MTC device, so that the another MTC device generates the group key according to the group key generating parameter, the key update count and the security key.

Then, the eNB may establish a binding relationship between the Group ID and the group integrity algorithm, the group encryption algorithm, and the Key Count, calculate an access stratum key of the MTC device and an access stratum group key of the group to which the MTC device belongs, and then bind the access stratum group key and the KeNB_Group with the Group ID. The calculation manner for the access stratum key of the MTC device is the same as in the prior art, and the access stratum group key may be calculated in the following manner.

The access stratum group key may include an access stratum group encryption key Key_Groupenc and an access stratum group integrity key Key_Groupint. Key_Groupenc=KDF (KeNB_Group, Group-enc-alg, Alg-ID), and Key_Groupint=KDF (KeNB_Group, Group-int-alg, Alg-ID), where KDF is a key generating function, Group-enc-alg represents that a group encryption algorithm is used in the current calculation, Alg-ID is an algorithm identifier, and Group-int-alg represents that a group integrity algorithm is used in the current calculation.

If the eNB has established a binding related to the Group ID, the eNB does not need to execute steps of selecting a group algorithm and calculating the group key. If the eNB has established a binding related to the Group ID and the Key Count bound with the Group ID is not 0, a Key Count value needs to be further sent in S291 in the following description.

Here, although in the first example, the eNB selects the group integrity algorithm and the group encryption algorithm according to the group security capability of the MTC device, in other embodiments, the group integrity algorithm and the group encryption algorithm may also be pre-configured in the eNB and the MTC device. In this way, the eNB does not need to select a corresponding algorithm.

In S291, the eNB sends an Access Stratum Security Mode Command (Access Stratum Security Mode Command, AS SMC) to the MTC device, and agrees with the MTC device upon an integrity algorithm, an encryption algorithm, a group integrity algorithm, and a group encryption algorithm that are selected.

In S292, the MTC device may calculate the access stratum key of the MTC device according to the integrity algorithm and the encryption algorithm among the agreed algorithms. The MTC device may calculate the group keys Key_Groupenc and Key_Groupint of the group according to the group integrity algorithm and the group encryption algorithm among the agreed algorithms and in combination with the KeNB_Group obtained from the AV_Group in S260.

If the Key Count is not equal to 0, the eNB may update the group key according to the Key Count. The manner for updating the group key may be first deriving a new KeNB_Group according to the Key Count, and then calculating a new group key by using the derived KeNB_Group.

For example, the following expression may be used to derive the new KeNB_Group. KeNB_Group* is used to indicate a derived KeNB_Group, and the derived KeNB_Group* is used to replace the KeNB_Group and used as the current KeNB_Group:

$$\text{KeNB\_Group*=KDF (KeNB\_Group, Cell ID, Group ID)}$$

where KDF is a generating function, and Cell ID is a cell identifier. The value of the Key Count is equal to the number of times of the derivation.

The following expression may further be used to directly derive the KeNB_Group*, and the KeNB_Group* is used as the KeNB_Group:

$$\text{KeNB\_Group*=KDF (KeNB\_Group, Cell ID, Group ID, Key Count)}$$

After the KeNB_Group is derived, the eNB may use the derived KeNB_Group and the agreed group algorithm to re-calculate the Key_Groupenc and the Key_Groupint. Then, the re-calculated Key_Groupenc and Key_Groupint are used to perform group communication.

When the Key Count is not equal to 0, the eNB needs to further send the Key Count to the MTC device through the AS SMC. The MTC device first derives a new KeNB_Group according to a calculation manner that is the same as the calculation manner of the eNB, and then re-calculates the Key_Groupenc and Key_Groupint by using the derived KeNB_Group and in combination with the agreed group algorithm. Then, the re-calculated Key_Groupenc and Key_Groupint are used to perform group communication.

In the first example, a group of MTC devices use an AV_Group for a period of time, the reuse of the AV_Group may be allowed, and a rule for using the SQN_Group may be that the SQN_Group in the AUTH_Group, which is received by the MTC device from a network side, is greater than or equal to the SQN_Group saved on a device side. If loss of synchronization occurs in the SQN_Group, the loss of synchronization may be solved through a resynchronization process.

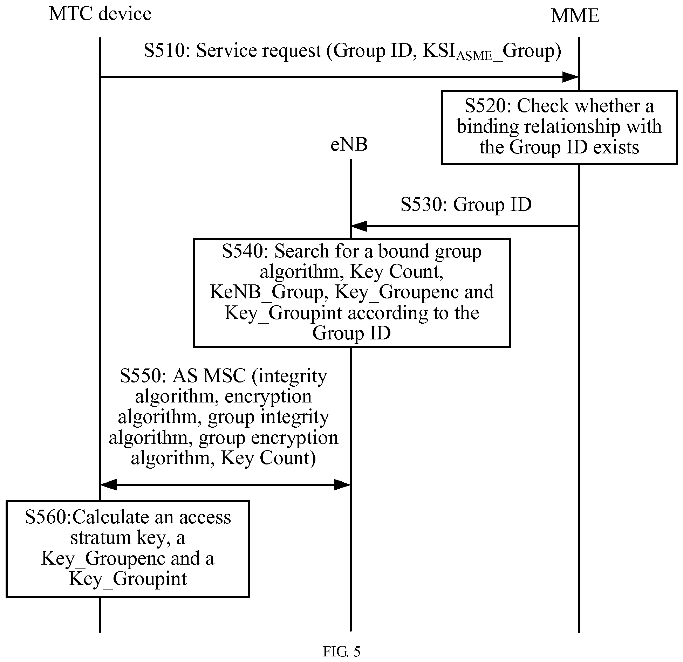

In addition, if an MTC device in a group is originally in group communication, but exits the group communication after a period of time, when the MTC device needs to be converted from an idle (IDLE) state to an active (ACTIVE) state to rejoin the group communication, the eNB sends a key update count Key Count required for updating the group key to the MTC device, so that the MTC device updates the group key according to the key update count. The synchronization of the access stratum key and the access stratum group key may be performed in a manner shown in FIG. 5.

In S510, an MTC device sends a service request message to an MME, where the message includes a Group ID and a $KSI_{ASME\_}$Group, where the $KSI_{ASME\_}$Group is a key identifier used to identify the $K_{ASME\_}$Group.

In S520, the MME checks whether a binding relationship with the Group ID exists, that is, whether an AV_Group bound with the Group ID exists. If no binding relationship exists, or the binding relationship exists but the $KSI_{ASME\_}$Group in the bound AV_Group is inconsistent with the $KSI_{ASME\_}$Group in the message, S220 to S260 and subsequent S270 to S292 in FIG. 2 are executed, where S220 to S260 are executed in FIG. 2 when no binding relationship exists in the MME.

In FIG. 5, if the MME saves a binding relationship and the $KSI_{ASME\_}$Group in the bound AV_Group is consistent with the $KSI_{ASME\_}$Group in the message, the MME sends the Group ID to the eNB in S530.

In S540, the eNB searches for a bound group algorithm, a Key Count, a KeNB_Group, a Key_Groupenc and a Key_Groupint according to the Group ID. Here, because a binding relationship exists in the MME and the procedure of FIG. 2 has been executed, the binding relationship related to the Group ID exists in the eNB.

In S550, the eNB sends an AS SMC to the MTC device, agrees with the MTC device upon an integrity algorithm, an encryption algorithm, a group integrity algorithm and a group encryption algorithm, and sends the Key Count to the MTC device.

In S560, the MTC device calculates an access stratum key, and access stratum group keys Key_Groupenc and Key_Groupint according to the agreed algorithms.

A second example

In the second example, a group communication root key is the KeNB_Group in the following description, which is equal to a Group Key generated by an HSS. A group key generating parameter sent to an MTC device may be a random number randomly generated by the HSS in a process of generating the Group Key. Because a base station needs to send the random number to the MTC device, the HSS needs to send the random number to an MME, and then the MME sends the random number to the base station.

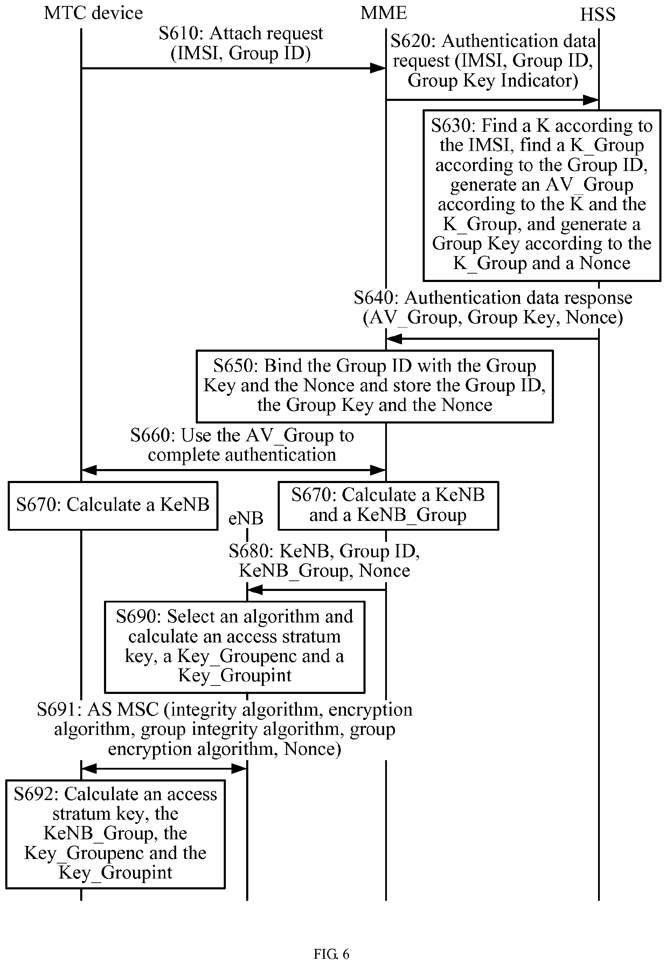

In the second example shown in FIG. 6, a USIM of an MTC device saves a Group ID of a group to which the MTC device belongs and a key K_Group corresponding to the Group ID. Apparently, a person skilled in the art may also figure out that the Group ID and the security key corresponding to the Group ID may also be directly saved in the MTC device. In addition, an HSS serving the MTC device also saves a correspondence between the Group ID and the K_Group.

In S610, the MTC device sends an attach request to an MME, where the request includes an IMSI of the MTC device and the Group ID.

After the MME receives the attach request sent by the MTC device, the MME determines whether a Group Key and a Nonce bound with the Group ID are saved, where the Nonce is a random number randomly generated by the HSS.

When determining that neither Group Key nor Nonce bound with the Group ID is saved, before S660, the MME executes the following operations:

In S620, the MME sends an authentication data request message to the HSS, where the message includes the IMSI and the Group ID. When the AV_Group generated in S630 needs to be used in a subsequent authentication, the authentication data request needs to further include an indicator Group Key Indicator, used to indicate that the MME has not established related binding information of the Group ID, and the HSS needs to generate the Group Key. Apparently, if an AV in the prior art is used in the subsequent authentication, the Group Key Indicator may also be carried to indicate that no related binding information of the Group ID is established; and

In S630, the HSS finds a corresponding K according to the IMSI, and generates an AV according to the K, so that the MTC device and the network side use the AV to perform authentication. The K corresponding to the IMSI may be referred to as an individual key of the MTC device, and the value of any one K is unique and is possessed by only one MTC device. When a USIM is inserted into the MTC device, because the USIM saves a K, the MTC device is allocated a unique K.

The HSS may also find a corresponding K according to the IMSI, find a corresponding K_Group according to the Group ID, and generate an AV_Group by combining the K and the K_Group, so that the MTC device and the network side use the AV_Group to perform authentication. In addition, the HSS finds the corresponding K_Group according to the Group ID, and generates the Group Key according to the K_Group and a random number Nonce generated randomly.

In S640, when the AV is used to perform authentication, the HSS sends the AV, the Group Key and the Nonce to the MME through an authentication data response message. When the AV_Group is used to perform authentication, the HSS sends the AV_Group, the Group Key and the Nonce to the MME through the authentication data response message.

In S650, the MME binds the Group ID with the Group Key and the Nonce and stores the Group ID, the Group Key and the Nonce.

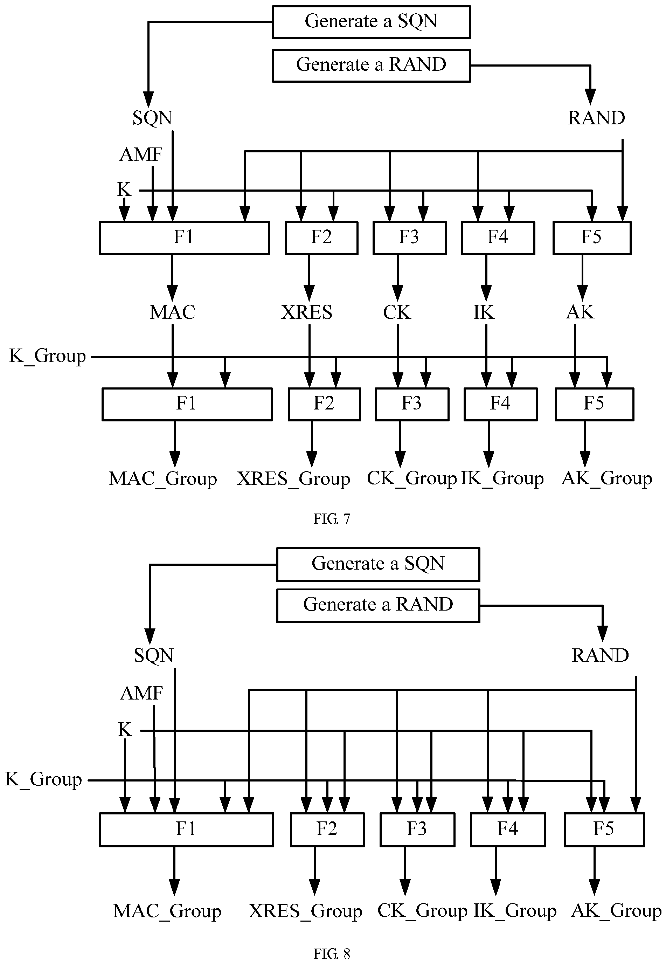

The manner for generating an AV_Group according to a K and a K_Group may be shown in FIG. 7 and FIG. 8. Here, FIG. 7 and FIG. 8 are only two examples but are not intended to limit the manner for generating the AV_Group.

In FIG. 7, an HSS generates an SQN and generates an RAND, and uses the SQN and the RAND as a sequence number and a random number for a group. The HSS inputs the SQN, the RAND, the AMF and the K into functions F1 to F5, which are the same as in the prior art, according to the manner shown in the figure, to obtain a MAC, an XRES, a CK, an IK and an AK. Then, the HSS inputs the K_Group, the MAC, the SRES, the CK, the IK and the AK into other functions F according to the manner shown in the figure, where these functions F may be the same or different, and specific formats are not limited herein. Through these functions F, a MAC_Group, an XRES_Group, a CK_Group, an IK_Group and an AK_Group may be obtained separately.

In FIG. 8, an HSS generates an SQN and generates an RAND, and uses the SQN and the RAND as a sequence number and a random number for a group. The HSS inputs the SQN, the RAND, the AMF, the K and the K_Group into functions F1 to F5, which are the same as in the prior art, according to the manner shown in the figure, to obtain a MAC_Group, an XRES_Group, a CK_Group, an IK_Group and an AK_Group respectively.

In FIG. 7 and FIG. 8, the following manner may be used to obtain the AV_Group:

$$AUTN\_Group = SQN \oplus AK\_Group \| AMF \| MAC\_Group$$

$$Kasme\_Group = KDF (SQN \oplus AK\_Group,\ SN\ ID,\ IK\_Group,\ CK\_Group)$$

$$AV\_Group = RAND \| XRES\_Group \| Kasme\_Group \| AUTN\_Group$$

where KDF is a key generating function, which may have a same calculation manner as in the prior art; $\oplus$ represents an XOR calculation; and $\|$ represents that two physical quantities before and after the symbol are put together to form a continuous physical quantity.

When determining that the Group Key and the Nonce bound with the Group ID are saved, before S660, the MME executes the following operations:

In S620, the MME sends an authentication data request message to the HSS, where the authentication data request message includes the IMSI when only an AV needs to be subsequently used to perform authentication, and the authentication data request message includes the IMSI and the Group ID when an AV_Group needs to be subsequently used to perform authentication;

In S630, when the AV is used to perform authentication, the HSS finds a corresponding K according to the IMSI, and generates the AV according to the K. When the AV_Group is used to perform authentication, the HSS finds a corresponding K according to the IMSI, finds a corresponding K_Group according to the Group ID, and combines the K and the K_Group to generate the AV_Group; and

In S640, the HSS sends the AV or the AV_Group to the MME through the authentication data response. In this case, S650 does not need to be executed.

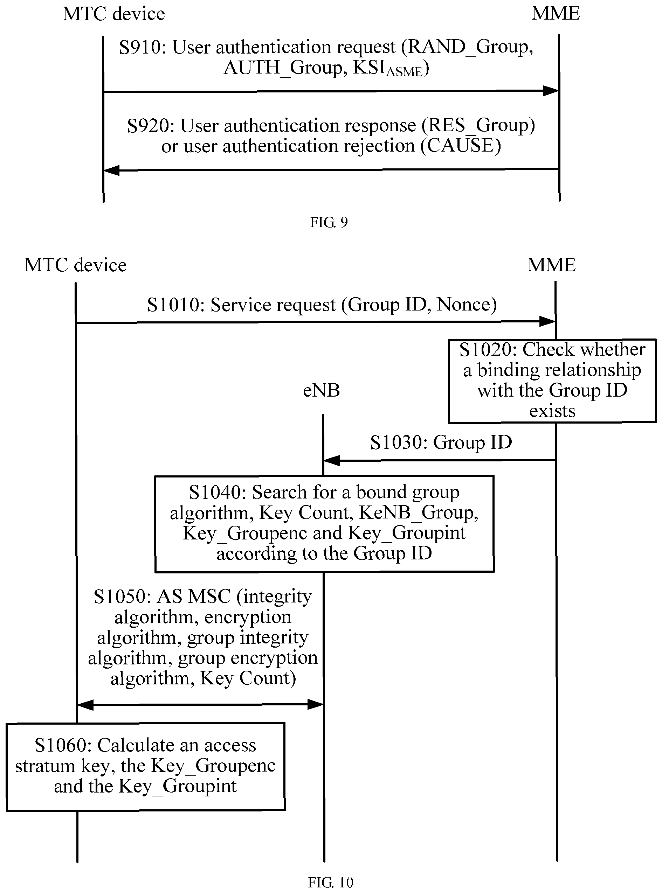

Continue the procedure in FIG. 6. In S660, the MME and the MTC device use the AV or the AV_Group to perform authentication. When the AV is used to perform authentication, a manner that is the same as in the prior art is used. When the AV_Group is used to perform authentication, the authentication process is shown in FIG. 9.

In S910, an MME sends a user authentication request to an MTC device, where the request carries a RAND_Group and an AUTN_Group in an AV_Group and a KSI$_{ASME}$ in the prior art.

In S920, when the authentication is successful, the MTC device returns a user authentication response to the MME, where the response carries a RES_Group. In addition, if the authentication fails, the MTC device sends a user authentication rejection message to the MME, where the message carries a CAUSE parameter.

Refer back to FIG. 6 and continue the procedure of FIG. 6. In S670, if the authentication is successful, the MME and the MTC device calculate a KeNB as in the prior art, and the MME uses the Group Key as a KeNB_Group. Although in the second example shown in FIG. 6, the MTC device and the MME jointly generate the KeNB in S670, the MTC device may also generate the KeNB at any moment after S660 and before S692.

In S680, the MME sends the Group ID, the KeNB, the KeNB_Group and the Nonce to the eNB.

In S690, the eNB selects an integrity algorithm and an encryption algorithm according to a security capability of the MTC device. If the eNB does not establish a binding related to the Group ID, the eNB selects, according to a group security capability of the MTC device, a group algorithm used to generate the group key, where the group algorithm may include a group integrity algorithm and a group encryption algorithm, and calculates an access stratum key and the group keys Key_Groupenc and Key_Groupint. In addition, the eNB further binds the group algorithm, the Key Count, the KeNB_Group, the KeNB_Groupenc, the KeNB_Groupint and the Nonce with the Group ID. For related content in S690, reference may be made to the description in S290, and the related content in S690 is not described herein again to avoid repetition.

In S691, the eNB sends an AS SMC to the MTC device, agrees with the MTC device upon an integrity algorithm, an encryption algorithm, a group integrity algorithm and a group encryption algorithm that are selected, and includes the Nonce into the AS SMC.

In S692, the MTC device calculates the access stratum key according to the agreed algorithms. The KeNB_Group is calculated according to the Nonce and the K_Group corresponding to the Group ID, and the KeNB_Group and the agreed group algorithm are used to calculate the access stratum group keys Key_Groupenc and Key_Groupint.

If the AS SMC carries the Key Count that is not equal to 0, the KeNB_Group is derived according to the Key Count, and the access stratum group key is updated according to the derived KeNB_Group. Meanwhile, at the eNB, because the Key Count is not equal to 0, the eNB also derives the KeNB Group according to the Key Count, and updates the access stratum group key according to the derived KeNB_Group. For derivation related content, reference may be made to the related content in S290, and the derivation related content is not described herein again to avoid repetition.

In addition, if an MTC device in a group is originally in group communication, but exits the group communication after a period of time, when the MTC device needs to be converted from an IDLE state to an ACTIVE state to rejoin the group communication, the eNB sends a key update count Key Count required for updating the group key to the MTC device, so that the MTC device updates the group key according to the key update count. The synchronization of the access stratum key and the access stratum group key may be performed in a manner shown in FIG. 10.

In S1010, an MTC device sends a service request message to an MME, where the message includes a Group ID and a Nonce value saved in a previous process of performing group communication, and the Nonce value is also a Nonce value of a group key generated by the MTC device.

In S1020, the MME checks whether a binding relationship with the Group ID exists, that is, whether a Group Key and a Nonce bound with the Group ID exist. If no binding relationship exists, or the binding relationship exists but the bound Nonce value is inconsistent with the Nonce value sent by the MTC device, in S1030, the MME sends the Group ID and the Nonce bound with the MME to an eNB, so that the eNB sends the Nonce to the MTC device, and sends a group algorithm bound with the Group ID and a Key Count that is not equal to 0 to the MTC device. If the binding relationship exists and the bound Nonce value is consistent with the Nonce value sent by the MTC device, in S1030, the MME sends the Group ID to the eNB.

In FIG. 10, it is assumed that the binding relationship exists in the MME and the Nonce values are consistent, and in S1030, the MME sends the Group ID to the eNB.

In S1040, the eNB searches for a bound group algorithm, a Key Count, a KeNB_Group, a Key_Groupenc, a Key_Groupint and a Nonce according to the Group ID.

In S1050, the eNB sends an AS SMC to the MTC device, agrees with the MTC device upon an integrity algorithm, an encryption algorithm, a group integrity algorithm and a group encryption algorithm, and sends the Key Count to the MTC device in a case that the Key Count is not equal to 0. In addition, if in S1030, the MME sends the Nonce value to the eNB, the AS SMC carries the Nonce value and is sent to the MTC device.

In S1060, the MTC device calculates an access stratum key, and access stratum group keys Key_Groupenc and Key_Groupint according to the agreed algorithms.

A third example

In the third example, MTC devices are divided, according to functions or services of the MTC devices, into different service sets in advance, which are distinguished according to service IDs. However, a service set is not equal to a group of MTC devices sharing a same group key, and the group of MTC devices sharing a same group key need further to be divided into groups by a base station according to a service ID. The manner for determining a group ID according to a service ID may be the same as in the prior art and is not described herein again, for example, performing grouping according to positions of MTC devices that support a same service.

A service ID may be preset in an MTC device, or may be set in a USIM. When the USIM is inserted into the MTC device, the USIM becomes a part of the MTC device, so as to determine the service supported by the MTC device.

A service root key is the KeNB_Service in the following description, which is equal to a Service Key generated by an HSS. Through the KeNB_Service, the base station may determine the KeNB_Group.

A group key generating parameter sent to the MTC device may be a group ID obtained after a base station performs the grouping according to a service ID and a random number required by the HSS for generating the Service Key. In this way, the MTC device may generate a group key that is the same as the group key generated by the base station in combination with the K_Service that is saved in the inserted USIM and corresponding to the service ID.

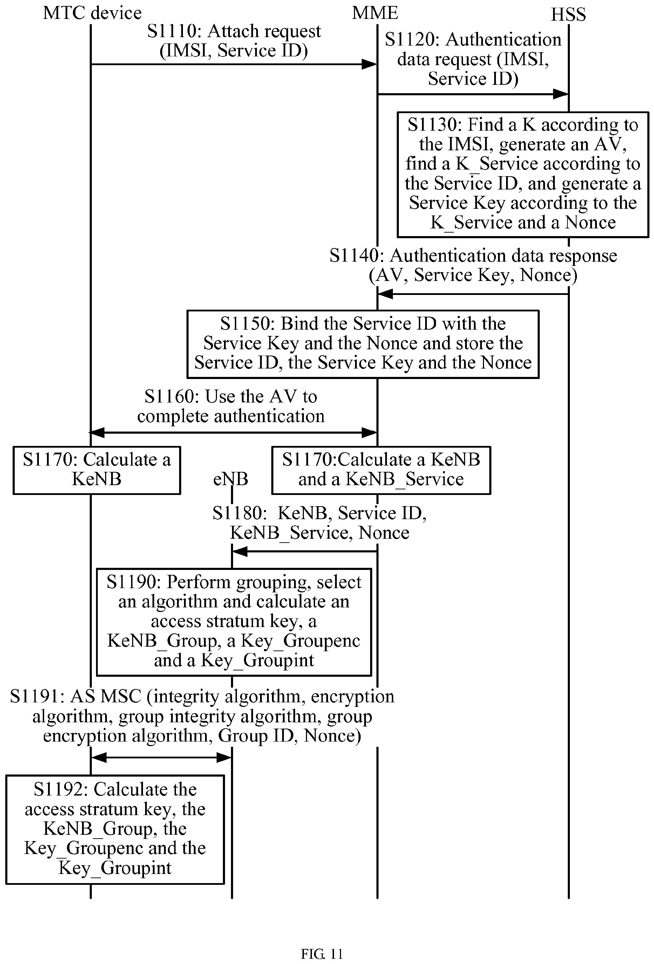

In the third example shown in FIG. 11, the USIM of the MTC device saves a Service ID of a service of the MTC device and a key K_Service corresponding to the Service ID. The HSS serving the MTC device also saves a correspondence between the Service ID and the K_Service.

In S1110, the MTC device sends an attach request to an MME, where the request includes an IMSI and a Service ID.

After the MME receives the attach request sent by the MTC device, the MME determines whether a Service Key and a Nonce bound with the Service ID are saved.

When determining that neither Service Key nor Nonce bound with the Service ID is saved, before S1160, the MME executes the following operations:

In S1120, the MME sends an authentication data request message to the HSS, where the message carries the IMSI and the Service ID;

In S1130, the HSS finds a corresponding K according to the IMSI, and generates an AV according to the K, so that the MME and the MTC device perform authentication by using the AV. The HSS finds the K_Service according to the Service ID, randomly generates a random number Nonce, and then generates the Service key according to the K_Service and the Nonce;

In S1140, the HSS sends the AV, the Service key and the Nonce to the MME through the authentication data response message; and

In S1150, the MME binds the Service ID with the Service Key and the Nonce and stores the Service ID, the Service Key and the Nonce.

When determining that the Service Key and the Nonce bound with the Service ID are saved, before S1160, the MME executes the following operations:

In S1120, the MME sends an authentication data request message to the HSS, where the message carries the IMSI;

In S1130, the HSS finds a corresponding K according to the IMSI, and generates an AV according to the K; and

In S1140, the HSS sends the AV to the MME through an authentication data response message. In this case, S1150 does not need to be executed.

Continue the procedure in FIG. 11. In S1160, the MME and the MTC device use the AV to perform authentication. The process of the authentication by using the AV is the same as in the prior art, and is not described herein again.

In S1170, if the authentication is successful, the MME and the MTC device calculate a KeNB, and the MME uses the Service Key as a KeNB_Service. Although in the third example shown in FIG. 11, the MTC device and the MME jointly generate the KeNB in S1170, the MTC device may also generate the KeNB at any moment after S1160 and before S1192.

In S1180, the MME sends the Service ID, the KeNB, the KeNB_Service and the Nonce to the eNB.

In S1190, the eNB selects an integrity algorithm and an encryption algorithm according to a security capability of the MTC device. If the eNB does not establish a binding relationship related to the Service ID, the eNB selects, according to a group security capability of the MTC device, a group algorithm used to generate the group key, where the group algorithm may include a group integrity algorithm and a group encryption algorithm, and calculates an access stratum key and an access stratum group key. The manner for selecting the group integrity algorithm and the group encryption algorithm may be similar to the manner for selecting the integrity algorithm and the encryption algorithm for the MTC device in the prior art. The group integrity algorithm and the group encryption algorithm may also be respectively similar to the integrity algorithm and the encryption algorithm in the prior art, and the difference lies in that the group integrity algorithm and the group encryption algorithm are algorithms for a group, but the integrity algorithm and the encryption algorithm are algorithms for an MTC device.

In the process of calculating the access stratum group key, including a Key_Groupenc and a Key_Groupint, the eNB first needs to divide MTC devices belonging to a same service into groups according to the Service ID, determine a KeNB_Group of the group according to the grouping, and then generate the group key according to the KeNB_Group and the group algorithm.

There are various manners for grouping MTC devices belonging to a same service, for example, performing grouping randomly, performing grouping according to signal strength of the MTC devices, and the like.

The following manner may be used to calculate the KeNB _Group:

$$KeNB\_Group = KDF \ (KeNB\_Service, \ Cell \ ID, \ Group \ ID)$$

where KDF is a key generating function, Cell ID is a serial number of a cell served by the eNB, and Group ID is a group ID of a group to which an MTC device belongs and that is obtained through the grouping.

After the KeNB_Group is calculated, the group encryption key Key_Groupenc and the group integrity key Key_Groupint may be calculated:

$$Key\_Groupenc = KDF \ (KeNB\_Group, \ Group\text{-}enc\text{-}alg, \ Alg\text{-}ID)$$

$$Key\_Groupint = KDF \ (KeNB\_Group, \ Group\text{-}int\text{-}alg, \ Alg\text{-}ID)$$

where KDF is a key generating function, Group-enc-alg represents that a group encryption algorithm is used in the current calculation, Alg-ID is an algorithm identifier, and Group-int-alg represents that a group integrity algorithm is used in the current calculation.

After calculating the group key, the eNB further binds the group algorithm, the Key Count, the KeNB_Group, the KeNB_Groupenc and the KeNB_Groupint with the Group ID. In addition, as described in the first example, when the eNB generates a corresponding group key for a group ID to establish a binding relationship with the group ID for the first time, the eNB sets the Key Count to 0, and when a PDCP count value reaches a maximum value, adds the Key Count value by 1, and derives and updates the group key through the Key Count value.

In other embodiments, the group integrity algorithm and the group encryption algorithm may also be preconfigured in the eNB and the MTC device. In this case, the group algorithm does not need to be selected in S1190, and the group algorithm does not need to be negotiated by using an AS SMC either.

In S1191, the eNB sends an AS SMC to the MTC device, agrees with the MTC device upon an integrity algorithm, an encryption algorithm, a group integrity algorithm and a group encryption algorithm that are selected, and includes the Group ID and the Nonce into the AS SMC.

In S1192, the MTC device may calculate the access stratum key of the MTC device according to the integrity algorithm and the encryption algorithm among the agreed algorithms. The MTC device calculates the group key according to the group integrity algorithm and the group encryption algorithm among the agreed algorithms, the Group ID and the Nonce obtained in S1091 and the K_Service saved in the USIM.

If the Key Count value is not equal to 0, the eNB may update the group key according to the Key Count, and the manner for updating the group key may be first deriving a new KeNB_Group according to the Key Count, and then using the derived KeNB_Group to calculate a new group key. For the deriving manner, reference may be made to related content in S192.

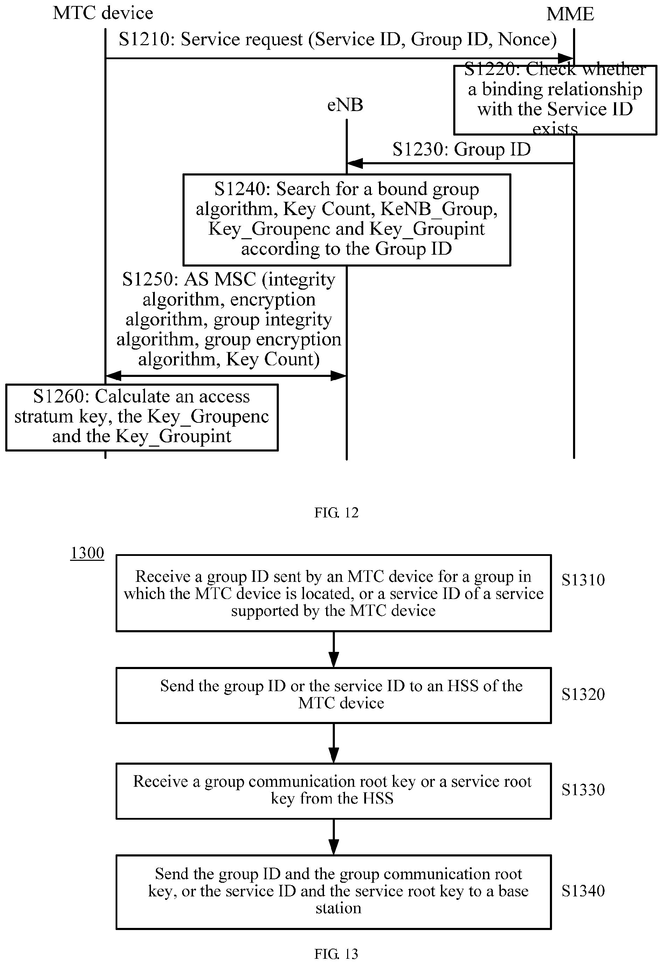

In addition, if an MTC device in a group is originally in group communication, but exits the group communication after a period of time, when the MTC device needs to be converted from an IDLE state or a detach state to an ACTIVE state to rejoin the group communication, a key update count Key Count required for updating the group key is sent to the MTC device, so that the MTC device updates the group key according to the key update count. The synchronization of the access stratum key and the access stratum group key may be performed in a manner shown in FIG. 12.

In S1210, an MTC device sends a service request message to an MME, where the message includes a Service ID, and a Nonce value and a Group ID saved in a previous process of performing group communication.

In S1220, the MME checks whether a binding relationship with the Service ID exists, that is, whether a Service Key and a Nonce bound with the Service ID exist. If no binding relationship exists, or the binding relationship exists but the bound Nonce value is inconsistent with the Nonce value sent by the MTC device, in S1230, the MME sends the Group ID and the Nonce bound in the MME to an eNB, so that the eNB sends the Nonce to the MTC device, and sends a group algorithm bound with the Group ID and a Key Count that is not equal to 0 to the MTC device. If the binding relationship exists and the bound Nonce value is consistent with the Nonce value sent by the MTC device, in S1230, the MME sends the Group ID to the eNB.

In FIG. 12, it is assumed that the binding relationship exists in the MME and the Nonce values are consistent, and in S1230, the MME sends the Group ID to the eNB.

In S1240, the eNB searches for a bound group algorithm, a Key Count, a KeNB_Group, a Key_Groupenc and a Key_Groupint according to the Group ID.

In S1250, the eNB sends an AS SMC to the MTC device, agrees with the MTC device upon an integrity algorithm, an encryption algorithm, a group integrity algorithm and a group encryption algorithm, and sends the Key Count to the MTC device in a case that the Key Count is not equal to 0. In addition, if in S1230, the MME sends the Nonce value to the eNB, the AS SMC carries the Nonce value and is sent to the MTC device.

In S1260, the MTC device calculates an access stratum key and an access stratum group key according to the agreed algorithms, the Nonce value, the K_Service, and the Group ID.

According to this embodiment of the present invention, a PDCP Count value is formed by two parts: an HFN and an SN, and in a process of performing group communication between the MTC device and the eNB, the eNB may not need to maintain an HFN value for each MTC device, but maintain a group HFN value for a group of MTC devices, where the group HFN is shared by the group of MTC devices, and the SN is determined by a sequence number in a data packet sent by the MTC device. In each MTC device within a group of MTC devices, a PDCP Count value is maintained. An HFN in the PDCP Count value maintains synchronization with a group HFN maintained by the eNB and an HFN of another MTC device, and the SN is maintained by the MTC device separately and related to the sequence number of the data packet sent by the MTC device.

For an uplink, each MTC device maintains a PDCP Count value, and the HFN maintained by each MTC device in the group maintains synchronization with the group HFN maintained by the eNB. The MTC devices in the group use an uplink PDCP Count value to encrypt uplink data, and include an SN into a header of a packet data unit (Packet Data Unit, PDU) of the uplink data. When receiving a data packet on a common bearer, the eNB uses a Count value that is formed by the HFN saved by the eNB and the SN carried in the data packet to decrypt the data packet. When the SN in the data packet sent by any one MTC device in the group reaches a threshold, after receiving the data packet, the eNB adds the group HFN by 1, and notifies each MTC device in the group of a value of the HFN or notifies each MTC device in the group that the HFN needs to be added by 1.

There are multiple manners for HFN notification. For example, for an MTC device with a small traffic volume, the HFN may be set to a fixed value. For another example, when an HFN is changeable, the eNB may send, through respective signaling bearers of all MTC devices in the group corresponding to the group ID, a common signaling bearer of the group corresponding to the group ID or a broadcast channel, the value of the HFN to all MTC devices in the group corresponding to the group ID. The eNB may send the value of the HFN to all MTC devices in the group corresponding to the group ID when the HFN reaches the threshold, or may send the value of the HFN to the MTC device when an MTC device joins the group corresponding to the group ID. For another example, when the HFN is changeable, if the HFN corresponding to the group ID reaches a threshold, the eNB may send, through respective signaling bearers of all MTC devices in the group corresponding to the group ID, a common signaling bearer of the group corresponding to the group ID or a broadcast channel, indication information used to indicate that the HFN needs to be added by 1 to all MTC devices in the group corresponding to the group ID. If the indication information that the HFN needs to be added is broadcast, an initial value of the group HFN needs to be negotiated by the MTC device with the eNB or sent by the eNB to the MTC device. In addition, the eNB may also directly include a PDCP Count value into a header of a PDU and send the PDCP Count value to the MTC device, so that the MTC device may extract the value of the HFN from the header according to the received PDU.

For a downlink, if group communication is based on a common bearer between the eNB and a group of MTC devices, generally, the MTC devices in the group receive group information sent by the eNB through the common bearer. In this case, changes to PDCP Count values of MTC devices in the group are consistent, so a new PDCP Count value mechanism does not need to be introduced in the downlink.

When the group HFN saved by the eNB reaches a threshold, the eNB updates the group key. When an HFN in a PDCP Count value in an MTC device reaches a threshold, the MTC device also updates the group key. The MTC device may determine, in multiple manners, that the HFN reaches the threshold. For example, the eNB may notify the MTC device of the value of the HFN or the indication that the HFN is added by 1, so that after the HFN is changed, the MTC device determines whether the HFN reaches the threshold, and if the threshold is reached, updates the group key. For another example, the eNB may directly notify the MTC device of the indication that the HFN reaches the threshold, so that the MTC device updates the group key.

No matter whether the group key is in the eNB or the MTC device, the group key may be updated in two manners.

One manner is to first update the KeNB_Group, and then use the updated KeNB_Group to calculate the Key_Groupenc and the Key_Groupint. In this updating manner, KeNB_Group*=KDF (KeNB_Group, Cell ID, Group ID) or KeNB_Group*=KDF (KeNB_Group, cell ID, Group ID, Key Count).

The other manner is to directly update the Key_Groupenc and the Key_Groupint. In this updating manner, Key_Groupenc*=KDF (Key_Groupenc, Cell ID, Group ID), and Key_Groupint*=KDF(Key_Groupint, Cell ID, Group ID).

In this embodiment of the present invention, to further ensure communication security, a network side may update a group communication root key when a certain condition is satisfied. When the certain condition is satisfied, the network side updates the group root key KeNB_Group, and performs re-authentication with the MTC device or sends, to the MTC device, information required for updating the KeNB_Group, so that the network side and the MTC device may update the group key according to a new KeNB_Group.

The certain condition may be that when a timer maintained by the network side reaches a threshold; or when a Key Count value maintained by the eNB reaches a threshold; or when a count value that is for a group or a service and maintained by the MME reaches a threshold, where the count value is added by 1 whenever the MME receives NAS signaling sent by the MTC device belonging to a group or a service.

Next, with reference to FIG. 13, a method 1300 for generating a group key according to an embodiment of the present invention is described.

As shown in FIG. 13, the method 1300 includes:

In S 1310, receive a group ID sent by a machine type communication MTC device for a group to which the MTC device belongs, or a service ID of a service supported by the MTC device.

In S1320, send the group ID or the service ID to a home subscriber system HSS serving the MTC device, so that the HSS generates a group communication root key according to a generated random number and a security key corresponding to the group ID, or so that the HSS generates a service root key according to a generated random number and a security key corresponding to the service ID.

In S1330, receive the group communication root key or the service root key from the HSS.

In S1340, send the group ID and the group communication root key, or the service ID and the service root key to a base station, so that the base station performs the following actions: (1) in a case of receiving the group ID and the group communication root key, generates a group key corresponding to the group ID according to the group communication root key, or in a case of receiving the service ID and the service root key, determines, according to the service ID, the group ID of the group to which the MTC device belongs, generates a group communication root key corresponding to the group ID according to the group ID and the service root key, and generates the group key corresponding to the group ID according to the group communication root key; (2) sends, to the MTC device, a generating parameter used to generate the group key, so that the MTC device generates the group key according to the group key generating parameter and a security key saved in the MTC device.

For example, the method 1300 may be executed by an MME. The operations by the MME are corresponding to the operations by a base station, an HSS and an MTC device, and therefore, for the description of steps in the method 1300, reference may be made to the description in the method 100. For specific examples, reference may be made to the first example to the third example, and the specific examples are not described herein again to avoid repetition.

According to this embodiment of the present invention, when the group ID is not bound with the group communication root key corresponding to the group ID, or the service ID is not bound with the service root key corresponding to the service ID, the group ID or the service ID is sent to the home subscriber system HSS serving the MTC device. If the group ID or the service ID is bound with the group communication root key or the service root key, the group ID or the service ID is not sent to the HSS. After the HSS sends, to the MME, the group communication root key or the service root key determined according to the group ID or the service ID, the MME binds the group communication root key with the group ID and stores the group communication root key and the group ID, or binds the service root key with the service ID and stores the service root key and the service ID. In this way, when the MME receives an attach request that carries the group ID or the service ID and that is sent by another MTC device, if the MTC device performs authentication with a network side successfully, the MME sends the group ID and the group communication root key, or the service ID and the service root key to the base station. Therefore, a problem that the HSS generates the group communication root key or the service root key repeatedly according to the group ID or the service ID may be avoided, and a problem that group communication root keys or service root keys generated for a same group ID or service ID vary due to difference in random numbers generated by the HSS may also be avoided, which help a same group ID to share a same group key.

According to an embodiment of the present invention, in S1330, besides receiving the group communication root key or the service root key from the HSS, the MME may also receive a random number from the HSS. In this case, the MME may bind the group communication root key and the random number with the group ID and store the group communication root key, the random number and the group ID, or bind the service root key and the random number with the service ID and store the service root key, the random number and the service ID. In addition, the MME needs to send the random number to the base station, so that the base station sends the random number to the MTC device, and the MTC device generates the group key according to the random number and the security key.

In a case that the MME has bound the group ID with the group communication root key and the random number, or has bound the service ID with the service root key and the random number, when the MME receives an attach request that carries the group ID or the service ID and that is sent by another MTC device, if the MTC device performs authentication with the network side successfully, the MME sends, to the base station, the group ID, and the group communication root key and random number that are bound with the group ID, or sends, to the base station, the service ID, and the service root key and the random number that are bound with the service ID. In this way, a problem that the HSS generates the group communication root key or the service root key repeatedly may be avoided, and the calculation complexity may also be reduced.

In the authentication process, the MME may perform device authentication on the MTC device by using the AV according to the prior art. In this embodiment of the present invention, besides using the AV to perform device authentication on the MTC device, the MME may also use a group authentication parameter to perform group authentication on the MTC device. For example, the group authentication parameter may be the AV_Group generated according to the K_Group in the first example. In addition, in this embodiment of the present invention, the MME may also use a group authentication parameter to perform device authentication and group authentication with the MTC device simultaneously, for example, the group authentication parameter may be a parameter in the AV_Group generated according to the K and the K_Group in the second example. The group authentication parameter used by the MME to perform group authentication is sent to the MME by the HSS after being generated according to the K_Group, or the K and the K_Group.

In addition, in the process of performing group communication, to further improve communication security, the group key may be updated when a certain condition is satisfied. According to this embodiment of the present invention, when a preset timer maintained by the network side reaches a first preset threshold, or when the number of times the base station updates the group key reaches a second preset threshold, or when a maintained non-access stratum count value reaches a third preset threshold, re-authentication is performed with the MTC device or a new group communication root key or service root key from the HSS is received, where the new group communication root key or service root key is generated by the HSS according to the security key and a new random number.

For example, in the first example, when the group key needs to be updated, the MME performs re-authentication with the MTC device, and through the re-authentication, may send, to the MTC device, an authentication parameter required for generating a new group key. In the second example and the third example, when the group key needs to be updated, the HSS randomly generates a new random number, and generates a new group communication root key or service root key according to a security key and the new random number, sends the new group communication root key or service root key parameter to the MME, the MME then sends the new group communication root key or service root key to the base station and binds the new group communication root key or service root key with the group ID or the service ID, the base station obtains the new group key according to the new group communication root key or service root key, and the MTC device also obtains the new random number to generate a new group key that is the same as the group key of the network side.

According to the method provided in this embodiment of the present invention for generating a group key, because an MTC device and an HSS save a security key corresponding to a group ID or a service ID, a network side may generate a group key of a group to which the MTC device belongs by using the security key and a random number generated by the HSS, and send a generating parameter required for generating a group key to an MTC device in the group, so that the MTC device generates the group key by using the group key generating parameter and the security key. Therefore, MTC devices in a same group can use a same group key to perform group communication normally, and a base station only needs to maintain the same group key for the same group, thereby reducing the operation complexity of the base station, decreasing the number of keys maintained and managed by the base station, and improving the performance of the base station.

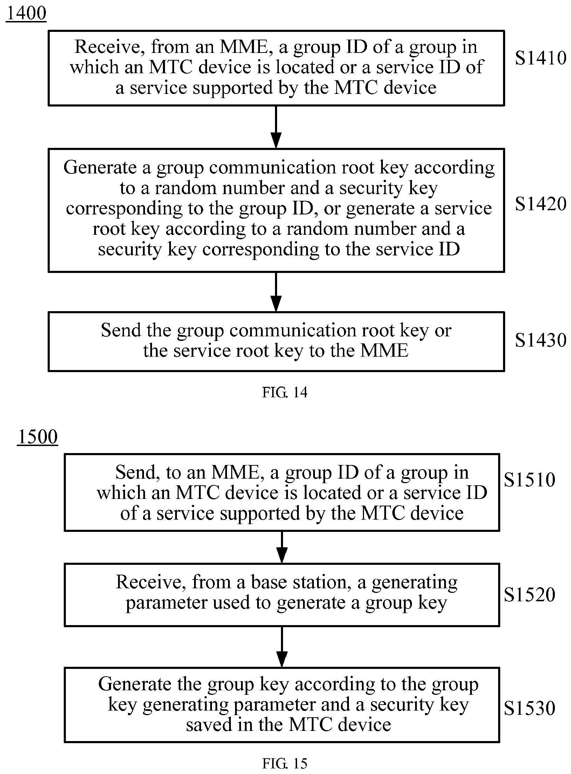

Next, with reference to FIG. 14, a method 1400 for generating a group key according to an embodiment of the present invention is described.

As shown in FIG. 14, the method 1400 includes:

In S1410, receive, from a mobility management entity MME, a group ID of a group to which a machine type communication MTC device belongs or a service ID of a service supported by the MTC device;

In S1420, generate a group communication root key according to a random number and a security key corresponding to the group ID, or generate a service root key according to a random number and a security key corresponding to the service ID;

In S1430, send the group communication root key or the service root key to the MME, so that the MME sends the group ID and the group communication root key, or the service ID and the service root key to a base station, and the base station performs the following actions: (1) in a case of receiving the group ID and the group communication root key, generates a group key corresponding to the group ID according to the group communication root key, or in a case of receiving the service ID and the service root key, determines, according to the service ID, the group ID of the group to which the MTC device belongs, generates a group communication root key corresponding to the group ID according to the group ID and the service root key, and generates the group key corresponding to the group ID according to the group communication root key; (2) sends, to the MTC device, a generating parameter used to generate the group key, so that the MTC device generates the group key according to the group key generating parameter and a security key saved in the MTC device.

For example, the method 1400 may be executed by an HSS serving an MTC device. The operations by the HSS are corresponding to the operations by a base station, an MME and the MTC device, and therefore, for the description of steps in the method 1400, reference may be made to the description in the method 100 and the method 1300. For specific examples, reference may be made to the first example to the third example, and the specific examples are not described herein again to avoid repetition.

According to this embodiment of the present invention, after receiving the group ID or the service ID sent by the MME, besides according to the group communication root key or service root key generated according to the security key corresponding to the group ID or the service ID, the HSS may generate, according to the security key corresponding to the group ID or the service ID, or according to the security key corresponding to the group ID or the service ID and an individual key of the MTC device, a group authentication parameter used for the MTC device to perform group authentication. For example, in the first example, the HSS generates, according to a K_Group corresponding to the group ID, an AV_Group used for group authentication; and in the second example, the HSS generates, according to the K_Group corresponding to the group ID and the K of the MTC device, an AV_Group used for group authentication.

After generating the group authentication parameter, the HSS sends the group authentication parameter to the MME, so that the MME performs authentication with the MTC device according to the group authentication parameter. The authentication performed by using a group authentication vector may be a group authentication for authenticating whether the MTC device belongs to the group corresponding to the group ID, or may be an authentication that includes both a group authentication and a device authentication.

According to the method provided in this embodiment of the present invention for generating a group key, because an MTC device and an HSS save a security key corresponding to a group ID or a service ID, a network side may generate a group key of a group to which the MTC device belongs by using the security key and a random number generated by the HSS, and send a generating parameter required for generating a group key to an MTC device in the group, so that the MTC device generates the group key by using the group key generating parameter and the security key. Therefore, MTC devices in a same group can use a same group key to perform group communication normally, and a base station only needs to maintain the same group key for the same group, thereby reducing the operation complexity of the base station, decreasing the number of keys maintained and managed by the base station, and improving the performance of the base station.

Next, with reference to FIG. 15, a method 1500 for generating a group key according to an embodiment of the present invention is described.

As shown in FIG. 15, the method 1500 includes:

In S 1510, send, to a mobility management entity MME, a group ID of a group to which a machine type communication MTC device belongs or a service ID of a service supported by the MTC device, so that the MME sends the group ID or the service ID to a subscriber home system HSS serving the MTC device, the HSS generates a group communication root key according to a random number and a security key corresponding to the group ID, or generates a service root key according to a random number and a security key corresponding to the service ID, and sends the group communication root key or the service root key to the MME, the MME sends the group ID and the group communication root key, or the service ID and the service root key to a base station, and in a case of receiving the group ID and the group communication root key, the base station generates a group key corresponding to the group ID according to the group communication root key, or in a case of receiving the service ID and the service root key, the base station determines, according to the service ID, the group ID of the group to which the MTC device belongs, generates a group communication root key corresponding to the group ID according to the group ID and the service root key, and generates the group key corresponding to the group ID according to the group communication root key;

In S1520, receive, from the base station, a generating parameter used to generate the group key; and

In S1530, generate the group key according to the group key generating parameter and a security key s saved in the MTC device.

For example, the method 1500 may be executed by an MTC device. The operations by the MTC device ares corresponding to the operations by a base station, an MME and an HSS, and therefore, for the description of steps in the method 1500, reference may be made to the description in the method 100, the method 1300 and the method 1400. For specific examples, reference may be made to the first example to the third example, and the specific examples are not described herein again to avoid repetition.

According to an embodiment of the present invention, in a case that the base station receives the group ID and the group communication root key, the group key generating parameter received from the base station by the MTC device may be an authentication parameter that is used to generate the group communication root key and that is received from the base station in an authentication process of the MTC device.

According to an embodiment of the present invention, in a case that the base station receives the group ID and the group communication root key, the group key generating parameter received from the base station by the MTC device may be a random number used by the HSS to generate the group communication root key, where the random number is sent to the MME by the HSS, and then sent to the base station by the MME.

According to an embodiment of the present invention, in a case that the base station receives the service ID and the service root key, the group key generating parameter received from the base station by the MTC device may be the group ID determined by the base station according to the service ID and a random number used by the HSS to generate the service root key.

According to this embodiment of the present invention, the group algorithm used to generate the group key may be preset in the base station and the MTC device, or the base station may send the group algorithm to the MTC device. Therefore, the group key generating parameter received from the base station by the MTC device may further include a group algorithm identifier used to generate the group key. By using the group algorithm identifier, the MTC device may determine a corresponding group algorithm to generate the group key.

In addition, all MTC devices with a same group ID may share a same HFN. To share a same HFN, according to this embodiment of the present invention, the HFN corresponding to the group ID may be preset to a fixed value; or, an MTC device may receive a value of the HFN from the base station through a signaling bearer of the MTC device, a common signaling bearer of the group corresponding to the group ID or a broadcast channel; or, when the HFN corresponding to the group ID reaches a threshold, the MTC device may receive, from the base station, indication information used to indicate that the HFN needs to be added by 1, through a signaling bearer of the MTC device, a common signaling bearer of a group corresponding to the group ID or a broadcast channel.

In the process of performing group communication, the group key may be dynamically updated to further improve security of the group communication. According to an embodiment of the present invention, the MTC device receives, from the base station, update information used to update the group key, and updates the group key according to the update information, where the base station updates the group key when the HFN corresponding to the group ID reaches a threshold. The update information may be a value of the HFN, or may be indication information that the HFN needs to be added by 1, or may be information about notifying the MTC device to derive the group key. In addition, when a preset timer maintained by a network side reaches a first preset threshold, or when the number of times the base station updates the group key reaches a second preset threshold, or when a non-access stratum count value maintained by the MME reaches a third preset threshold, the MTC device may perform re-authentication with the MME or receive, from the base station, a new group key generating parameter to generate a new group key according to the new group key generating parameter and the security key.

According to an embodiment of the present invention, when rejoining group communication corresponding to the group ID after entering an idle state or a detached state, the MTC device receives, from the base station, a key update count required for updating the group key, where the key update count is added by 1 by the base station each time the HFN corresponding to the group ID reaches a threshold; and updates the group key according to the key update count.

According to the method provided in this embodiment of the present invention for generating a group key, because an MTC device and an HSS save a security key corresponding to a group ID or a service ID, a network side may generate a group key of a group to which the MTC device belongs by using the security key and a random number generated by the HSS, and send a generating parameter required for generating a group key to an MTC device in the group, so that the MTC device generates the group key by using the group key generating parameter and the security key. Therefore, MTC devices in a same group can use a same group key to perform group communication normally, and a base station only needs to maintain the same group key for the same group, thereby reducing the operation complexity of the base station, decreasing the number of keys maintained and managed by the base station, and improving the performance of the base station.

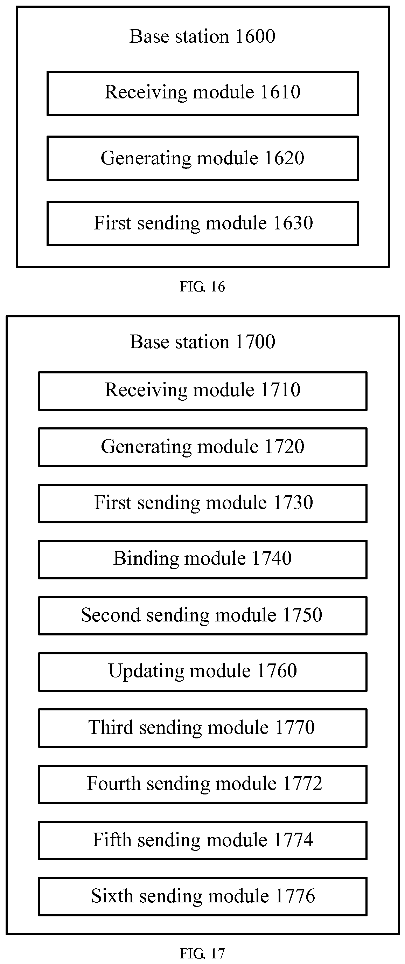

The foregoing describes the method for generating a group key from the perspective of a base station, an MME, an HSS and an MTC device, and the following describes related devices with reference to FIG. 16 to FIG. 23.

FIG. 16 is a structural block diagram of a base station 1600 according to an embodiment of the present invention.

The base station 1600 includes a receiving module 1610, a generating module 1620 and a first sending module 1630. The receiving module 1610 may be implemented through an input interface, the generating module 1620 may be implemented through a processor, and the first sending module 1630 may be implemented through an output interface.

The receiving module 1610 is configured to receive, from a mobility management entity MME, a group ID of a group to which a machine type communication MTC device belongs, and a group communication root key related to a security key, where the security key is corresponding to the group ID; or, receive, from the MME, a service ID of a service supported by the MTC device, and a service root key related to a security key, where the security key is corresponding to the service ID, determine, according to the service ID, the group ID of the group to which the MTC device belongs, and generate the group communication root key according to the group ID and the service root key. The generating module 1620 is configured to generate a group key corresponding to the group ID according to the group communication root key. The first sending module 1630 is configured to send, to the MTC device, a generating parameter used to generate the group key, so that the MTC device generates the group key according to the group key generating parameter and a security key saved in the MTC device.

For the foregoing and other operations by and/or functions of the receiving module 1610, the generating module 1620 and the first sending module 1630, reference may be made to the description in the method 100 and the first example to the third example, and the operations and/or functions are not described herein again to avoid repetition.

According to the base station provided in this embodiment of the present invention, because an MTC device and an HSS save a security key corresponding to a group ID or a service ID, a network side may generate a group key of a group to which the MTC device belongs by using the security key and a random number generated by the HSS, and the base station sends a generating parameter required for generating a group key to an MTC device in the group, so that the MTC device generates the group key by using the group key generating parameter and the security key. Therefore, MTC devices in a same group can use a same group key to perform group communication normally, and the base station only needs to maintain the same group key for the same group, thereby reducing the operation complexity of the base station, decreasing the number of keys maintained and managed by the base station, and improving the performance of the base station.

FIG. 17 is a structural block diagram of a base station 1700 according to an embodiment of the present invention.

A receiving module 1710, a generating module 1720 and a first sending module 1730 of the base station 1700 are basically the same as the receiving module 1610, the generating module 1620 and the first sending module 1630 of the base station 1600.

According to an embodiment of the present invention, the receiving module 1710 is further configured to receive, from the MME, a random number used to generate a group communication root key. In this case, a group key generating parameter sent to an MTC device includes the random number.

According to an embodiment of the present invention, the group communication root key is generated according to the random number; the first sending module 1730 is configured to send to the MTC device, in an authentication process of the MTC device, an authentication parameter used to generate the group communication root key, where the authentication parameter includes the random number.

According to an embodiment of the present invention, when generating the group communication root key according to the group ID and the service root key, generating the group communication root key according to the random number is further included; and the first sending module 1730 is configured to send the group ID and the random number to the MTC device.

According to this embodiment of the present invention, the first sending module 1730 may further be specifically configured to send, to the MTC device, a group algorithm identifier used to generate a group key.

According to this embodiment of the present invention, the base station 1700 may further include a binding module 1740 and a second sending module 1750. The binding module 1740 is configured to bind the group communication root key, the group key and the group key generating parameter with the group ID. The second sending module 1750 is configured to send, when it is determined that another MTC device belongs to the group corresponding to the group ID, the group key generating parameter bound with the group ID to the another MTC device, so that the another MTC device generates the group key according to the group key generating parameter and a security key.

According to this embodiment of the present invention, the base station 1700 may further include an updating module 1760 and a third sending module 1770. The updating module 1760 is configured to update the group key when the HFN corresponding to the group ID reaches a threshold, where all MTC devices with the group ID share a same HFN. The third sending module 1770 is configured to send, to the MTC device, update information used to update the group key, so that the MTC device updates the group key according to the update information.

All MTC devices with the group ID may share a same HFN. In this case, the HFN corresponding to the group ID may be preset to a fixed value; or the base station 1700 may further include a fourth sending module 1772. The fourth sending module 1772 may be configured to send, through respective signaling bearers of all MTC devices in the group corresponding to the group ID, a common signaling bearer of the group corresponding to the group ID or a broadcast channel, a value of the HFN to all MTC devices in the group corresponding to the group ID. Or, the fourth sending module 1772 may be configured to send, when the HFN corresponding to the group ID reaches a threshold, through respective signaling bearers of all MTC devices in the group corresponding to the group ID, a common signaling bearer of the group corresponding to the group ID or a broadcast channel, indication information used to indicate that the HFN needs to be added by 1 to all MTC devices in the group corresponding to the group ID.

According to this embodiment of the present invention, the base station 1700 may further include a fifth sending module 1774, configured to send, when the MTC device rejoins group communication corresponding to the group ID after entering an idle state or a detached state, a key update count required for updating the group key to the MTC device, so that the MTC device updates the group key according to the key update count. The key update count is added by 1 each time the HFN corresponding to the group ID reaches a threshold.

In addition, the base station 1700 may further include a sixth sending module 1776, configured to send, when another MTC device belonging to the group ID joins group communication corresponding to the group ID for the first time, a generating parameter used to generate the group key and the key update count required for updating the group key to the another MTC device, so that the another MTC device generates the group key according to the generating parameter, the key update count and a security key. The key update count is added by 1 each time the HFN corresponding to the group ID reaches a threshold.

For the foregoing and other operations by and/or functions of the receiving module 1710, the first sending module 1730, the binding module 1740, the second sending module 1750, the updating module 1760, the third sending module 1770, the fourth sending module 1772, the fifth sending module 1774 and the sixth sending module 1776, reference may be made to the method 100 and the description in the first example to the third example, and the operations and/or functions are not described herein again to avoid repetition. The binding module 1740 and the updating module 1760 may be implemented through a processor, and the second sending module 1750, the third sending module 1770, the fourth sending module 1772, the fifth sending module 1774 and the sixth sending module 1776 may be implemented through an output interface.

According to the base station provided in this embodiment of the present invention, MTC devices in a same group can use a same group key to perform group communication normally, and the base station only needs to maintain the same group key for the same group, thereby reducing the operation complexity of the base station, decreasing the number of keys maintained and managed by the base station, and improving the performance of the base station.

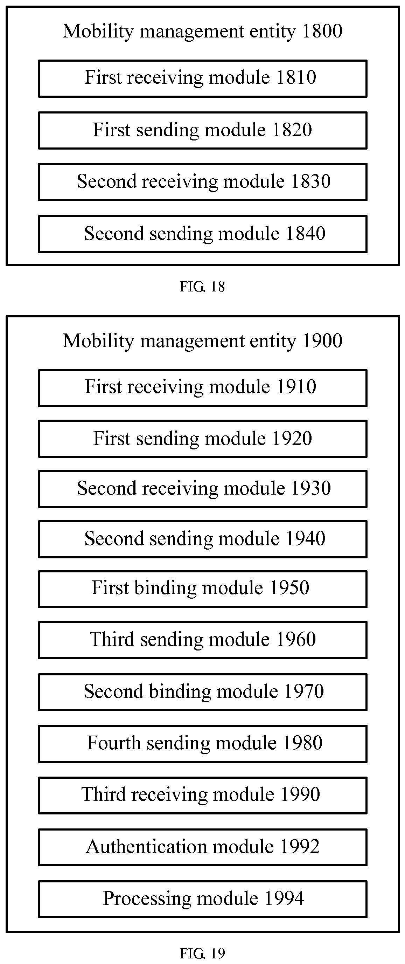

FIG. 18 is a structural block diagram of a mobility management entity 1800 according to an embodiment of the present invention.

The mobility management entity 1800 includes a first receiving module 1810, a first sending module 1820, a second receiving module 1830 and a second sending module 1840. The first receiving module 1810 and the second receiving module 1830 may be implemented through an input interface, and the first sending module 1820 and the second sending module 1840 may be implemented through an output interface.

The first receiving module 1810 is configured to receive a group ID sent by a machine type communication MTC device for a group to which the MTC device belongs, or a service ID of a service supported by the MTC device. The first sending module 1820 is configured to send the group ID or the service ID to a home subscriber system HSS serving the MTC device, so that the HSS generates a group communication root key according to a generated random number and a security key corresponding to the group ID, or so that the HSS generates a service root key according to a generated random number and a security key corresponding to the service ID. The second receiving module 1830 is configured to receive the group communication root key or the service root key from the HSS. The second sending module 1840 is configured to send the group ID and the group communication root key, or the service ID and the service root key to a base station, so that the base station performs the following actions: (1) in a case of receiving the group ID and the group communication root key, generates a group key corresponding to the group ID according to the group communication root key, or in a case of receiving the service ID and the service root key, determines, according to the service ID, the group ID of the group to which the MTC device belongs, generates a group communication root key corresponding to the group ID according to the group ID and the service root key, and generates the group key corresponding to the group ID according to the group communication root key; (2) sends, to the MTC device, a generating parameter used to generate the group key, so that the MTC device generates the group key according to the group key generating parameter and the security key saved in the MTC device.

For the foregoing and other operations by and/or functions of the first receiving module 1810, the first sending module 1820, the second receiving module 1830 and the second sending module 1840, reference may be made to the description in the method 1300 and the first example to the third example, and the operations and/or functions are not described herein again to avoid repetition.

According to the mobility management entity provided in this embodiment of the present invention, because an MTC device and an HSS save a security key corresponding to a group ID or a service ID, a network side may generate a group key of a group to which the MTC device belongs by using the security key and a random number generated by the HSS, and a base station sends a generating parameter required for generating a group key to an MTC device in the group, so that the MTC device generates the group key by using the group key generating parameter and the security key. Therefore, MTC devices in a same group can use a same group key to perform group communication normally, and a base station only needs to maintain the same group key for the same group, thereby reducing the operation complexity of the base station, decreasing the number of keys maintained and managed by the base station, and improving the performance of the base station.

FIG. 19 is a structural block diagram of a mobility management entity 1900 according to an embodiment of the present invention.

A first receiving module 1910, a first sending module 1920, a second receiving module 1930 and a second sending module 1940 of the mobility management entity 1900 are basically the same as the first receiving module 1810, the first sending module 1820, the second receiving module 1830 and the second sending module 1840 of the mobility management entity 1800.

According to an embodiment of the present invention, the first sending module 1920 is configured to send, when the group ID is not bound with the group communication root key corresponding to the group ID, or the service ID is not bound with the service root key corresponding to the service ID, the group ID or the service ID to a home subscriber system HSS serving the MTC device.

According to this embodiment of the present invention, the mobility management entity 1900 may further include a first binding module 1950 and a third sending module 1960. The first binding module 1950 is configured to bind the group communication root key with the group ID and store the group communication root key and the group ID, or bind the service root key with the service ID and store the service root key and the service ID. The third sending module 1960 is configured to: when an attach request that carries the group ID or the service ID and that is sent by another MTC device is received, if the MTC device performs authentication with a network side successfully, send the group ID and the group communication root key, or the service ID and the service root key to the base station.

According to this embodiment of the present invention, the second receiving module 1930 is configured to receive, from an HSS, the group communication root key or the service root key and a random number; and the second sending module 1940 is further configured to send the random number to the base station, so that the base station sends the random number to the MTC device. In this case, the mobility management entity 1900 may further include a second binding module 1970, configured to bind the group communication root key and the random number with the group ID and store the group communication root key, the random number and the group ID, or bind the service root key and the random number with the service ID and store the service root key, the random number and the service ID. In this case, the mobility management entity 1900 may further include a fourth sending module 1980, configured to: when an attach request that carries the group ID or the service ID and that is sent by another MTC device is received, if the MTC device performs authentication with the network side successfully, send the group ID, and the group communication root key and the random number that are bound with the group ID to the base station, or send the service ID, and the service root key and the random number that are bound with the service ID to the base station.

According to an embodiment of the present invention, the mobility management entity 1900 may further include a third receiving module 1990 and an authentication module 1992. The third receiving module 1990 is configured to receive a group authentication parameter from the HSS, where the group authentication parameter is generated by the HSS according to the security key, or generated by the HSS according to the security key and an individual key of the MTC device. The authentication module 1992 is configured to perform authentication with the MTC device according to the group authentication parameter.

According to this embodiment of the present invention, the mobility management entity 1900 may further include a processing module 1994, configured to perform, when a preset timer maintained by the network side reaches a first preset threshold, or when the number of times the base station updates the group key reaches a second preset threshold, or when a maintained non-access stratum count value reaches a third preset threshold, re-authentication with the MTC device or receive a new group communication root key or service root key from the HSS, where the new group communication root key or service root key is generated by the HSS according to the security key and a new random number.

For the foregoing and other operations by and/or functions of the first sending module 1920, the second receiving module 1930, the second sending module 1940, the first binding module 1950, the third sending module 1960, the second binding module 1970, the fourth sending module 1980, the third receiving module 1990, the authentication module 1992 and the processing module 1994, reference may be made to the description in the method 1300 and the first example to the third example, and the operations and/or functions are not described herein again to avoid repetition. The third sending module 1960 and the fourth sending module 1980 may be implemented through an output interface, the third receiving module 1990 may be implemented through an input interface, and the first binding module 1950, the second binding module 1970, the authentication module 1992 and the processing module 1994 may be implemented through a processor.

According to the mobility management entity provided in this embodiment of the present invention, MTC devices in a same group can use a same group key to perform group communication normally, and a base station only needs to maintain the same group key for the same group, thereby reducing the operation complexity of the base station, decreasing the number of keys maintained and managed by the base station, and improving the performance of the base station.

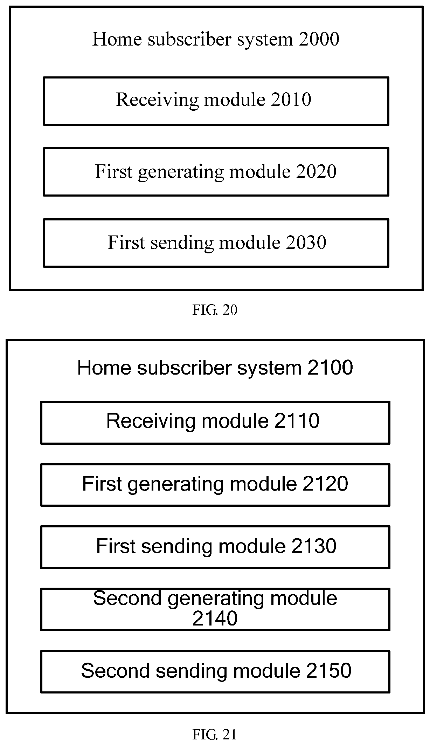

FIG. 20 is a structural block diagram of a home subscriber system 2000 according to an embodiment of the present invention.

The home subscriber system 2000 includes a receiving module 2010, a first generating module 2020 and a first sending module 2030. The receiving module 2010 may be implemented through an input interface, the first generating module 2020 may be implemented through a processor, and the first sending module 2030 may be implemented through an output interface.

The receiving module 2010 is configured to receive, from a mobility management entity MME, a group ID of a group to which a machine type communication MTC device belongs or a service ID of a service supported by the MTC device. The first generating module 2020 is configured to generate a group communication root key according to a random number and a security key corresponding to the group ID, or generate a service root key according to a random number and a security key corresponding to the service ID. The first sending module 2030 is configured to send the group communication root key or the service root key to the MME, so that the MME sends the group ID and the group communication root key, or the service ID and the service root key to a base station, and the base station performs the following actions: (1) in a case of receiving the group ID and the group communication root key, generates a group key corresponding to the group ID according to the group communication root key, or in a case of receiving the service ID and the service root key, determines, according to the service ID, the group ID of the group to which the MTC device belongs, generates a group communication root key corresponding to the group ID according to the group ID and the service root key, and generates the group key corresponding to the group ID according to the group communication root key; (2) sends, to the MTC device, a generating parameter used to generate the group key, so that the MTC device generates the group key according to the group key generating parameter and a security key saved in the MTC device.

For the foregoing and other operations by and/or functions of the receiving module 2010, the first generating module 2020 and the first sending module 2030, reference may be made to the description in the method 1400 and the first example to the third example, and the operations and/or functions are not described herein again to avoid repetition.

According to the home subscriber system provided in this embodiment of the present invention, because an MTC device and the HSS save a security key corresponding to a group ID or a service ID, a network side may generate a group key of a group to which the MTC device belongs by using the security key and a random number generated by the HSS, and a base station sends a generating parameter required for generating a group key to an MTC device in the group, so that the MTC device generates the group key by using the group key generating parameter and the security key. Therefore, MTC devices in a same group can use a same group key to perform group communication normally, and a base station only needs to maintain the same group key for the same group, thereby reducing the operation complexity of the base station, decreasing the number of keys maintained and managed by the base station, and improving the performance of the base station.

FIG. 21 is a structural block diagram of a home subscriber system 2100 according to an embodiment of the present invention.

A receiving module 2110, a first generating module 2120 and a first sending module 2130 of the home subscriber system 2100 are basically the same as the receiving module 2010, the first generating module 2020 and the first sending module 2030 of the home subscriber system 2100.

According to an embodiment of the present invention, the home subscriber system 2100 may further include a second generating module 2140 and a second sending module 2150. The second generating module 2140 is configured to generate, according to a security key corresponding to the group ID or the service ID, or according to a security key corresponding to the group ID or the service ID and an individual key of the MTC device, a group authentication parameter used for the MTC device to perform group authentication. The second sending module 2150 is configured to send the group authentication parameter to the MME, so that the MME performs authentication with the MTC device.

For the foregoing and other operations by and/or functions of the second generating module 2140 and the second sending module 2150, reference may be made to the description in the method 1400 and the first example to the third example, and the operations and/or functions are not described herein again to avoid repetition. The second generating module 2140 may be implemented through a processor, and the second sending module 2150 may be implemented through an output interface.

According to the home subscriber system provided in this embodiment of the present invention, MTC devices in a same group can use a same group key to perform group communication normally, and a base station only needs to maintain the same group key for the same group, thereby reducing the operation complexity of the base station, decreasing the number of keys maintained and managed by the base station, and improving the performance of the base station.

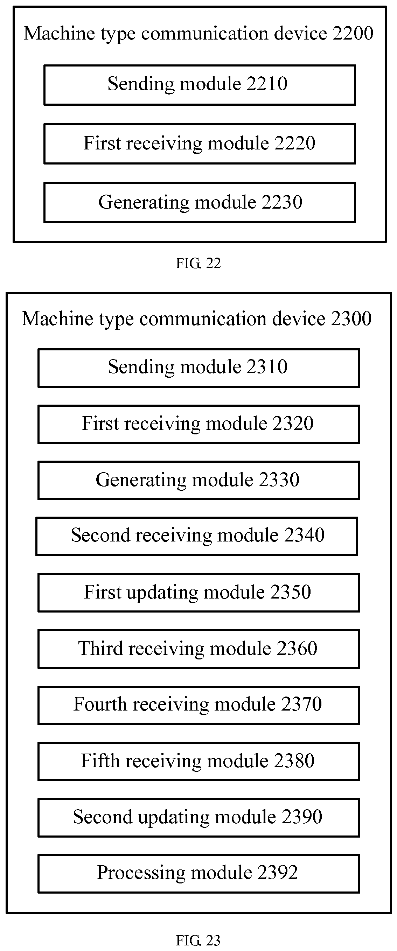

FIG. 22 is a structural block diagram of a machine type communication device 2200 according to an embodiment of the present invention.

The machine type communication device 2200 includes a sending module 2210, a first receiving module 2220 and a generating module 2230. The sending module 2210 may be implemented through an output interface, the first receiving module 2220 may be implemented through an input interface, and the generating module 2230 may be implemented through a processor.

The sending module 2210 is configured to send, to a mobility management entity MME, a group ID of a group to which a machine type communication MTC device belongs or a service ID of a service supported by the MTC device, so that the MME sends the group ID or the service ID to a subscriber home system HSS serving the MTC device, the HSS generates a group communication root key according to a random number and a security key corresponding to the group ID, or generates a service root key according to a random number and a security key corresponding to the service ID, and sends the group communication root key or the service root key to the MME, the MME sends the group ID and the group communication root key, or the service ID and the service root key to a base station, and in a case of receiving the group ID and the group communication root key, the base station generates a group key corresponding to the group ID according to the group communication root key, or in a case of receiving the service ID and the service root key, the base station determines, according to the service ID, the group ID of the group to which the MTC device belongs, generates a group communication root key corresponding to the group ID according to the group ID and the service root key, and generates the group key corresponding to the group ID according to the group communication root key. The first receiving module 2220 is configured to receive, from the base station, a generating parameter used to generate the group key. The generating module 2230 is configured to generate the group key according to the group key generating parameter and a security key saved in the MTC device.

For the foregoing and other operations by and/or functions of the sending module 2210, the first receiving module 2220 and the generating module 2230, reference may be made to the description in the method 1500 and the first example to the third example, and the operations and/or functions are not described herein again to avoid repetition.

According to the machine type communication device provided in this embodiment of the present invention, because the MTC device and an HSS save a security key corresponding to a group ID or a service ID, a network side may generate a group key of a group to which the MTC device belongs by using the security key and a random number generated by the HSS, and a base station sends a generating parameter required for generating a group key to an MTC device in the group, so that the MTC device generates the group key by using the group key generating parameter and the security key. Therefore, MTC devices in a same group can use a same group key to perform group communication normally, and a base station only needs to maintain the same group key for the same group, thereby reducing the operation complexity of the base station, decreasing the number of keys maintained and managed by the base station, and improving the performance of the base station.

FIG. 23 is a structural block diagram of a machine type communication device 2300 according to an embodiment of the present invention.

A sending module 2310, a first receiving module 2320 and a generating module 2330 of the machine type communication device 2300 are basically the same as the sending module 2210, the first receiving module 2220 and the generating module 2230 of the machine type communication device 2200.

According to this embodiment of the present invention, in a case that a base station receives a group ID and a group communication root key, the first receiving module 2320 is configured to receive, in an authentication process of the MTC device, an authentication parameter used to generate the group communication root key from the base station, or, the first receiving module 2320 is configured to receive a random number from the base station, where the random number is sent to the base station by an HSS through an MME.

According to an embodiment of the present invention, in a case that a base station receives a service ID and a service root key, the first receiving module 2320 is configured to receive a group ID and a random number from the base station, where the random number is sent to the base station by an HSS through an MME, and the group ID is determined by the base station according to the service ID.

According to this embodiment of the present invention, the first receiving module 2320 may further be configured to receive, from the base station, a group algorithm identifier used to generate the group key.

According to this embodiment of the present invention, the machine type communication device 2300 may further include a second receiving module 2340 and a first updating module 2350. The second receiving module 2340 is configured to receive, from the base station, update information used to update the group key, where the base station updates the group key when an HFN corresponding to the group ID reaches a threshold, and all MTC devices with a same group ID share a same HFN. The first updating module 2350 is configured to update the group key according to the update information.

All MTC devices in a same group may share a same HFN. In this case, the HFN corresponding to the group ID may be preset to a fixed value; or, the machine type communication device 2300 may further include a third receiving module 2360, configured to receive a value of the HFN from the base station through a signaling bearer of the MTC device, a common signaling bearer of the group corresponding to the group ID or a broadcast channel; or the machine type communication device 2300 may further include a fourth receiving module 2370, configured to receive from the base station, when the HFN corresponding to the group ID reaches a threshold, indication information used to indicate that the HFN needs to be added by 1, through a signaling bearer of the MTC device, a common signaling bearer of the group corresponding to the group ID or a broadcast channel.

According to an embodiment of the present invention, the machine type communication device 2300 may further include a fifth receiving module 2380 and a second updating module 2390. The fifth receiving module 2380 is configured to receive from the base station, when the MTC device rejoins group communication corresponding to the group ID after entering an idle state or a detached state, a key update count required for updating the group key, where the key update count is added by 1 by the base station each time the HFN corresponding to the group ID reaches a threshold. The second updating module 2390 is configured to update the group key according to the key update count.

According to this embodiment of the present invention, the machine type communication device 2300 may further include a processing module 2392, configured to perform, when a preset timer maintained by the network side reaches a first preset threshold, or when the number of times the base station updates the group key reaches a second preset threshold, or when a non-access stratum count value maintained by the MME reaches a third preset threshold, re-authentication with the MME or receive, from the base station, a new group key generating parameter to generate a new group key according to the new group key generating parameter and the security key.

For the foregoing and other operations by and/or functions of the first receiving module 2320, the second receiving module 2340, the first updating module 2350, the third receiving module 2360, the fourth receiving module 2370, the fifth receiving module 2380, the second updating module 2390 and the processing module 2392, reference may be made to the description in the method 1500 and the first example to the third example, and the operations and/functions are not described herein again to avoid repetition. The second receiving module 2340, the third receiving module 2360, the fourth receiving module 2370 and the fifth receiving module 2380 may be implemented through an input interface, and the first updating module 2350, the second updating module 2390 and the processing module 2392 may be executed through a processor.

According to the machine type communication device provided in this embodiment of the present invention, MTC devices in a same group can use a same group key to perform group communication normally, and a base station only needs to maintain the same group key for the same group, thereby reducing the operation complexity of the base station, decreasing the number of keys maintained and managed by the base station, and improving the performance of the base station.

A person of ordinary skill in the art may be aware that, in combination with the methods described in the embodiments disclosed in this specification, the steps and units may be implemented by electronic hardware, computer software, or a combination thereof. In order to clearly describe the interchangeability between the hardware and the software, the foregoing has generally described compositions and steps of each embodiment according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

The steps of the methods described with reference to the embodiments disclosed in this specification may be implemented by hardware, a software program executed by a processor, or a combination thereof. The software program may reside in a random access memory (RAM), a memory, a read-only memory (ROM), an electrically programmable ROM, an electrically erasable programmable ROM, a register, a hard disk, a removable disk, a CD-ROM, or any other forms of storage mediums known in the art.

Although some embodiments of the present invention are shown and described, a person skilled in the art should understand that, various modifications may be made to the embodiments without departing from the principle of the present invention, and such modifications shall fall within the scope of the present invention, as defined in the appended claims.

## Claims

1. A base station, comprising:

    a receiving module (1610, 1710), configured to receive, from a mobility management entity, MME, a group ID of a group to which a machine type communication, MTC, device belongs, and a group communication root key related to a security key, wherein the security key is corresponding to the group ID; or, receive, from the MME, a service ID of a service supported by the MTC device, and a service root key related to a security key, wherein the security key is corresponding to the service ID, determine, according to the service ID, the group ID of the group to which the MTC device belongs, and generate the group communication root key according to the group ID and the service root key;
    a generating module (1620, 1720), configured to generate a group key corresponding to the group ID according to the group communication root key, the group key being used to perform group communication between the group of MTC devices and the base station; and
    a first sending module (1630, 1730), configured to send, to the MTC device, a generating parameter used to generate the group key, so that the MTC device is enabled to generate the group key according to the group key generating parameter and the security key.

2. The base station according to claim 1, wherein the receiving module (1610, 1710) is further configured to receive, from the MME, a random number used to generate a group communication root key; and
the group key generating parameter sent to the MTC device comprises the random number.

3. The base station according to claim 1, wherein the group communication root key is generated according to a random number; and
the first sending module (1630, 1730) is configured to send, in an authentication process of the MTC device, to the MTC device, an authentication parameter used to generate the group communication root key, wherein the authentication parameter comprises the random number.

4. The base station according to claim 1, wherein when the group communication root key is generated according to the group ID and the service root key, generating the group communication root key according to a random number is further comprised; and
the first sending module (1630, 1730) is configured to send the group ID and the random number to the MTC device.

5. The base station according to any one of claims 1 to 4, further comprising:

a binding module (1740), configured to bind the group communication root key, the group key and the group key generating parameter with the group ID; and
a second sending module (1750), configured to send, when it is determined that another MTC device belongs to the group corresponding to the group ID, the group key generating parameter bound with the group ID to the another MTC device, so that the another MTC device is enabled to generate the group key according to the group key generating parameter and the security key corresponding to the group ID or the service ID.

6. A mobility management entity comprising:

a first receiving module (1810, 1910), configured to receive, from an MTC device, a group ID of a group, to which the MTC device belongs, or a service ID of a service supported by the MTC device;
a first sending module (1820, 1920), configured to send the group ID or the service ID to a home subscriber system, HSS, of the MTC device;
a second receiving module (1830, 1930), configured to receive a group communication root key or a service root key from the HSS; and
a second sending module (1840, 1940), configured to send the group ID and the group communication root key to a base station so that the base station is enabled to generate a group key, or to send the service ID and the service root key to the base station so that the base station is enabled to generate the group key.

7. The mobility management entity according to claim 6, wherein the first sending module (1820, 1920) is configured to send, when the group ID is not bound with the group communication root key corresponding to the group ID, or the service ID is not bound with the service root key corresponding to the service ID, the group ID or the service ID to the home subscriber system HSS serving the MTC device.

8. The mobility management entity according to claim 6 or 7, further comprising:

a first binding module (1950), configured to bind the group communication root key with the group ID and store the group communication root key and the group ID, or bind the service root key with the service ID and store the service root key and the service ID; and
a third sending module (1960), configured to send, when an attach request that carries the group ID or the service ID and that is sent by another MTC device is received, and if the MTC device performs authentication with a network side successfully, the group ID and the group communication root key, or the service ID and the service root key to the base station.

9. The mobility management entity according to any one of claims 6 to 8, wherein the second receiving module (1830, 1930) is configured to receive the group communication root key or the service root key and the random number from the HSS; and
the second sending module (1840, 1940) is further configured to send the random number to the base station.

10. The mobility management entity according to claim 9, further comprising:

a second binding module (1970), configured to bind the group communication root key and the random number with the group ID and store the group communication root key, the random number and the group ID, or bind the service root key and the random number with the service ID and store the service root key, the random number and the service ID; and
a fourth sending module (1980), configured to send, when an attach request that carries the group ID or the service ID and that is sent by another MTC device is received, and if the MTC device performs authentication with the network side successfully, the group ID, and the group communication root key and the random number that are bound with the group ID to the base station, or the service ID, and the service root key and the random number that are bound with the service ID to the base station.

11. The mobility management entity according to any one of claims 6 to 10, further comprising:

a third receiving module (1990), configured to receive a group authentication parameter from the HSS; and
an authentication module (1992), configured to perform authentication with the MTC device according to the group authentication parameter.

12. A machine type communication device belonging to a group of machine type communication, MTC, devices, comprising:

a sending module (2210, 2310), configured to send, to a mobility management entity, MME, a group ID of the group or a service ID of a service supported by the MTC device;
a first receiving module (2220, 2320), configured to receive, from a base station, a group key generating parameter; and
a generating module (2230, 2330), configured to generate the group key according to the group key generating parameter and a security key saved in the MTC device, wherein the group key is used to perform group communication between the MTC devices and the base station.

13. The machine type communication device according to claim 12, wherein the first receiving module (2220, 2320) is configured to receive, in an authentication process of the MTC device, an authentication parameter used to generate a group communication root key from the base station; or receive a random number from the base station.

14. The machine type communication device according to claim 12, wherein the first receiving module (2220, 2320) is configured to receive the group ID and a random number from the base station.

15. The machine type communication device according to any one of claims 12 to 14, further comprising:

a second receiving module (2340), configured to receive, from the base station, update information used to update the group key, wherein the base station updates the group key when a Hyper Frame Number, HFN, corresponding to the group ID reaches a threshold, and all MTC devices with one ID share a same HFN; and
a first updating module (2350), configured to update the group key according to the update information.

## Patentansprüche

1. Basisstation, umfassend:

ein Empfangsmodul (1610, 1710), ausgelegt zum Empfangen einer Gruppen-ID einer Gruppe, zu der eine Maschinentypkommunikations- bzw. MTC-Vorrichtung gehört, und eines Gruppenkommunikations-Wurzelschlüssels in Bezug auf einen Sicherheitsschlüssel von einer Mobilitätsverwaltungsentität MME, wobei der Sicherheitsschlüssel der Gruppen-ID entspricht; oder Empfangen einer Dienst-ID eines durch die MTC-Vorrichtung unterstützten Dienstes und eines Dienst-Wurzelschlüssels in Bezug auf einen Sicherheitsschlüssel von der MME, wobei der Sicherheitsschlüssel der Dienst-ID entspricht, Bestimmen der Gruppen-ID der Gruppe, zu der die MTC-Vorrichtung gehört, gemäß der Dienst-ID und Erzeugen des Gruppenkommunikations-Wurzelschlüssels gemäß der Gruppen-ID und dem Dienst-Wurzelschlüssel;
ein Erzeugungsmodul (1620, 1720), ausgelegt zum Erzeugen eines Gruppenschlüssels entsprechend der Gruppen-ID gemäß dem Gruppenkommunikations-Wurzelschlüssel, wobei der Gruppenschlüssel zum Durchführen von Gruppenkommunikation zwischen der Gruppe von MTC-Vorrichtungen und der Basisstation verwendet wird; und
ein erstes Sendemodul (1630, 1730), ausgelegt zum Senden eines zum Erzeugen des Gruppenschlüssels verwendeten Erzeugungsparameters an die MTC-Vorrichtung, so dass die MTC-Vorrichtung befähigt wird, den Gruppenschlüssel gemäß dem Gruppenschlüssel-Erzeugungsparameter und dem Sicherheitsschlüssel zu erzeugen.

2. Basisstation nach Anspruch 1, wobei das Empfangsmodul (1610, 1710) ferner ausgelegt ist zum Empfangen einer zum Erzeugen eines Gruppenkommunikations-Wurzelschlüssels verwendeten Zufallszahl von der MME; und
der Gruppenschlüssel-Erzeugungsparameter, der zu der MTC-Vorrichtung gesendet wird, die Zufallszahl umfasst.

3. Basisstation nach Anspruch 1, wobei der Gruppenkommunikations-Wurzelschlüssel gemäß einer Zufallszahl erzeugt wird; und
das erste Sendemodul (1630, 1730) ausgelegt ist zum Senden eines zum Erzeugen des Gruppenkommunikations-Wurzelschlüssels verwendeten Authentifizierungsparameters in einem Authentifizierungsprozess der MTC-Vorrichtung zu der MTC-Vorrichtung, wobei der Authentifizierungsparameter die Zufallszahl umfasst.

4. Basisstation nach Anspruch 1, wobei, wenn der Gruppenkommunikations-Wurzelschlüssel gemäß der Gruppen-ID und dem Dienst-Wurzelschlüssel erzeugt wird, Erzeugen des Gruppenkommunikations-Wurzelschlüssels gemäß einer Zufallszahl ferner enthalten ist; und
das erste Sendemodul (1630, 1730) ausgelegt ist zum Senden der Gruppen-ID und der Zufallszahl zu der MTC-Vorrichtung.

5. Basisstation nach einem der Ansprüche 1 bis 4, ferner umfassend:

ein Bindemodul (1740), ausgelegt zum Binden des Gruppenkommunikations-Wurzelschlüssels, des Gruppenschlüssels und des Gruppenschlüssel-Erzeugungsparameters mit der Gruppen-ID; und
ein zweites Sendemodul (1750), das dafür ausgelegt ist, wenn bestimmt wird, dass eine andere MTC-Vorrichtung zu der Gruppe, die der Gruppen-ID entspricht, gehört, den mit der Gruppen-ID gebundenen Gruppenschlüssel-Erzeugungsparameter zu der anderen MTC-Vorrichtung zu senden, so dass die andere MTC-Vorrichtung befähigt wird, den Gruppenschlüssel gemäß dem Gruppenschlüssel-Erzeugungsparameter und dem Sicherheitsschlüssel, der der Gruppen-ID oder der Dienst-ID entspricht, zu erzeugen.

6. Mobilitätsverwaltungsentität, umfassend:

ein erstes Empfangsmodul (1810, 1910), das dafür ausgelegt ist, von einer MTC-Vorrichtung eine Gruppen-ID einer Gruppe, zu der die MTC-Vorrichtung gehört, oder eine Dienst-ID eines durch die MTC-Vorrichtung unterstützten Dienstes zu empfangen;
ein erstes Sendemodul (1820, 1920), ausgelegt zum Senden der Gruppen-ID oder der Dienst-ID zu einem Heimatteilnehmersystem HSS der MTC-Vorrichtung;
ein zweites Empfangsmodul (1830, 1930), ausgelegt zum Empfangen eines Gruppenkommunikations-Wurzelschlüssels oder eines Dienst-Wurzelschlüssels von dem HSS; und
ein zweites Sendemodul (1840, 1940), ausgelegt zum Senden der Gruppen-ID und des Gruppenkommunikations-Wurzelschlüssels zu einer Basisstation, so dass die Basisstation befähigt wird, einen Gruppenschlüssel zu erzeugen, oder zum Senden der Dienst-ID und des Dienst-Wurzelschlüssels zur Basisstation, so dass die Basisstation befähigt wird, den Gruppenschlüssel zu erzeugen.

7. Mobilitätsverwaltungsentität nach Anspruch 6, wobei das erste Sendemodul (1820, 1920) ausgelegt ist zum Senden der Gruppen-ID oder der Dienst-ID zu dem die MTC-Vorrichtung versorgenden Heimatteilnehmersystem HSS, wenn die Gruppen-ID nicht mit dem der Gruppen-ID entsprechenden Gruppenkommunikations-Wurzelschlüssel gebunden ist oder die Dienst-ID nicht mit dem der Dienst-ID entsprechenden Dienst-Wurzelschlüssel gebunden ist.

8. Mobilitätsverwaltungsentität nach Anspruch 6 oder 7, ferner umfassend:

ein erstes Bindemodul (1950), ausgelegt zum Binden des Gruppenkommunikations-Wurzelschlüssels mit der Gruppen-ID und Speichern des Gruppenkommunikations-Wurzelschlüssels und der Gruppen-ID oder Binden des Dienst-Wurzelschlüssels mit der Dienst-ID und Speichern des Dienst-Wurzelschlüssels und der Dienst-ID; und
ein drittes Sendemodul (1960), ausgelegt zum Senden der Gruppen-ID und des Gruppenkommunikations-Wurzelschlüssels oder der Dienst-ID und des Dienst-Wurzelschlüssels zur Basisstation, wenn eine Anschlussanforderung empfangen wird, die die Gruppen-ID oder die Dienst-ID führt und die durch eine andere MTC-Vorrichtung gesendet wird, und wenn die MTC-Vorrichtung erfolgreich Authentifizierung mit einer Netzseite durchführt.

9. Mobilitätsverwaltungsentität nach einem der Ansprüche 6 bis 8, wobei das zweite Empfangsmodul (1830, 1930) ausgelegt ist zum Empfangen des Gruppenkommunikations-Wurzelschlüssels oder des Dienst-Wurzelschlüssels und der Zufallszahl von dem HSS; und
das zweite Sendemodul (1840, 1940) ferner ausgelegt ist zum Senden der Zufallszahl zur Basisstation.

10. Mobilitätsverwaltungsentität nach Anspruch 9, ferner umfassend:

ein zweites Bindemodul (1970), ausgelegt zum Binden des Gruppenkommunikations-Wurzelschlüssels und der Zufallszahl mit der Gruppen-ID und Speichern des Gruppenkommunikations-Wurzelschlüssels, der Zufallszahl und der Gruppen-ID oder Binden des Dienst-Wurzelschlüssels und der Zufallszahl mit der Dienst-ID und Speichern des Dienst-Wurzelschlüssels, der Zufallszahl und der Dienst-ID; und

ein viertes Sendemodul (1980), ausgelegt zum Senden der Gruppen-ID und des Gruppenkommunikations-Wurzelschlüssels und der Zufallszahl, die mit der Gruppen-ID gebunden sind, zur Basisstation oder der Dienst-ID und des Dienst-Wurzelschlüssels und der Zufallszahl, die mit der Dienst-ID gebunden sind, zur Basisstation, wenn eine Anschlussanforderung empfangen wird, die die Gruppen-ID oder die Dienst-ID führt und die durch eine andere MTC-Vorrichtung gesendet wird, und wenn die MTC-Vorrichtung erfolgreich Authentifizierung mit einer Netzseite durchführt.

11. Mobilitätsverwaltungsentität nach einem der Ansprüche 6 bis 10, ferner umfassend:

ein drittes Empfangsmodul (1990), ausgelegt zum Empfangen eines Gruppenauthentifizierungsparameters vom HSS; und
ein Authentifizierungsmodul (1992), ausgelegt zum Durchführen von Authentifizierung mit der MTC-Vorrichtung gemäß dem Gruppenauthentifizierungsparameter.

12. Maschinentypkommunikations-Vorrichtung, die zu einer Gruppe von Maschinentypkommunikations- bzw. MTC-Vorrichtungen gehört, umfassend:

ein Sendemodul (2210, 2310), ausgelegt zum Senden einer Gruppen-ID der Gruppe oder einer Dienst-ID eines durch die MTC-Vorrichtung unterstützten Dienstes zu einer Mobilitätsverwaltungsentität MME;
ein erstes Empfangsmodul (2220, 2320), ausgelegt zum Empfangen eines Gruppenschlüssel-Erzeugungsparameters von einer Basisstation; und
ein Erzeugungsmodul (2230, 2330), ausgelegt zum Erzeugen des Gruppenschlüssels gemäß dem Gruppenschlüssel-Erzeugungsparameter und einem Sicherheitsschlüssel, der in der MTC-Vorrichtung abgespeichert ist, wobei der Gruppenschlüssel zum Durchführen von Gruppenkommunikation zwischen den MTC-Vorrichtungen und der Basisstation verwendet wird.

13. Maschinentypkommunikations-Vorrichtung nach Anspruch 12, wobei das erste Empfangsmodul (2220, 2320) ausgelegt ist zum Empfangen eines zum Erzeugen eines Gruppenkommunikations-Wurzelschlüssels verwendeten Authentifizierungsparameters von der Basisstation; oder Empfangen einer Zufallszahl von der Basisstation.

14. Maschinentypkommunikations-Vorrichtung nach Anspruch 12, wobei das erste Empfangsmodul (2220, 2320) ausgelegt ist zum Empfangen der Gruppen-ID und einer Zufallszahl von der Basisstation.

15. Maschinentypkommunikations-Vorrichtung nach einem der Ansprüche 12 bis 14, ferner umfassend:

ein zweites Empfangsmodul (2340), ausgelegt zum Empfangen von zum Aktualisieren des Gruppenschlüssels verwendeten Aktualisierungsinformationen von der Basisstation, wobei die Basisstation den Gruppenschlüssel aktualisiert, wenn eine der Gruppen-ID entsprechende "Hyper Frame Number" HFN eine Schwelle erreicht, und sich alle MTC-Vorrichtungen mit einer ID eine selbe HFN teilen; und
ein erstes Aktualisierungsmodul (2350), ausgelegt zum Aktualisieren des Gruppenschlüssels gemäß den Aktualisierungsinformationen.

**Revendications**

1. Station de base, comprenant :

un module de réception (1610, 1710), configuré pour recevoir, d'une entité de gestion de mobilité, MME, un ID de groupe d'un groupe auquel appartient un dispositif de communication de type machine, MTC, et une clé racine de communication de groupe liée à une clé de sécurité, dans laquelle la clé de sécurité correspond à l'ID de groupe ; ou, recevoir, de la MME, un ID de service d'un service pris en charge par le dispositif MTC, et une clé racine de service liée à une clé de sécurité, dans laquelle la clé de sécurité correspond à l'ID de service, déterminer, en fonction de l'ID de service, l'ID de groupe du groupe auquel appartient le dispositif MTC, et générer la clé racine de communication de groupe en fonction de l'ID de groupe et de la clé racine de service ;
un module de génération (1620, 1720), configuré pour générer une clé de groupe correspondant à l'ID de groupe en fonction de la clé racine de communication de groupe, la clé de groupe étant utilisée pour effectuer une communication de groupe entre le groupe de dispositifs MTC et la station de base ; et

un premier module d'envoi (1630, 1730), configuré pour envoyer, au dispositif MTC, un paramètre de génération utilisé pour générer la clé de groupe, de sorte que le dispositif MTC est capable de générer la clé de groupe en fonction du paramètre de génération de clé de groupe et de la clé de sécurité.

2. Station de base selon la revendication 1, dans laquelle le module de réception (1610, 1710) est configuré en outre pour recevoir, de la MME, un nombre aléatoire utilisé pour générer une clé racine de communication de groupe ; et le paramètre de génération de clé de groupe envoyé au dispositif MTC comprend le nombre aléatoire.

3. Station de base selon la revendication 1, dans laquelle la clé racine de communication de groupe est générée en fonction d'un nombre aléatoire ; et

le premier module d'envoi (1630, 1730) est configuré pour envoyer, dans un processus d'authentification du dispositif MTC, au dispositif MTC, un paramètre d'authentification utilisé pour générer la clé racine de communication de groupe, dans laquelle le paramètre d'authentification comprend le nombre aléatoire.

4. Station de base selon la revendication 1, dans laquelle lorsque la clé racine de communication de groupe est générée en fonction de l'ID de groupe et de la clé racine de service, on comprend en outre de générer la clé racine de communication de groupe en fonction d'un nombre aléatoire ; et

le premier module d'envoi (1630, 1730) est configuré pour envoyer l'ID de groupe et le nombre aléatoire au dispositif MTC.

5. Station de base selon l'une quelconque des revendications 1 à 4, comprenant en outre :

un module de liaison (1740), configuré pour lier la clé racine de communication de groupe, la clé de groupe et le paramètre de génération de clé de groupe à l'ID de groupe ; et

un deuxième module d'envoi (1750), configuré pour envoyer, lorsqu'on détermine qu'un autre dispositif MTC appartient au groupe correspondant à l'ID de groupe, le paramètre de génération de clé de groupe lié à l'ID de groupe à l'autre dispositif MTC, de sorte que l'autre dispositif MTC est capable de générer la clé de groupe en fonction du paramètre de génération de clé de groupe et de la clé de sécurité correspondant à l'ID de groupe ou à l'ID de service.

6. Entité de gestion de mobilité comprenant :

un premier module de réception (1810, 1910), configuré pour recevoir, d'un dispositif MTC, un ID de groupe d'un groupe, auquel appartient le dispositif MTC, ou un ID de service d'un service pris en charge par le dispositif MTC ;

un premier module d'envoi (1820, 1920), configuré pour envoyer l'ID de groupe ou l'ID de service à un système d'abonné domestique, HSS, du dispositif MTC ;

un deuxième module de réception (1830, 1930), configuré pour recevoir une clé racine de communication de groupe ou une clé racine de service du HSS ; et

un deuxième module d'envoi (1840, 1940), configuré pour envoyer l'ID de groupe et la clé racine de communication de groupe à une station de base de sorte que la station de base est capable de générer une clé de groupe, ou d'envoyer l'ID de service et la clé racine de service à la station de base de sorte que la station de base est capable de générer la clé de groupe.

7. Entité de gestion de mobilité selon la revendication 6, dans laquelle le premier module d'envoi (1820, 1920) est configuré pour envoyer, lorsque l'ID de groupe n'est pas lié à la clé racine de communication de groupe correspondant à l'ID de groupe, ou que l'ID de service n'est pas lié à la clé racine de service correspondant à l'ID de service, l'ID de groupe ou l'ID de service au système d'abonné domestique HSS desservant le dispositif MTC.

8. Entité de gestion de mobilité selon la revendication 6 ou 7, comprenant en outre :

un premier module de liaison (1950), configuré pour lier la clé racine de communication de groupe à l'ID de groupe et stocker la clé racine de communication de groupe et l'ID de groupe, ou lier la clé racine de service à l'ID de service et stocker la clé racine de service et l'ID de service ; et

un troisième module d'envoi (1960), configuré pour envoyer, lorsqu'une requête jointe qui achemine l'ID de groupe ou l'ID de service et qui est envoyée par un autre dispositif MTC est reçue, et si le dispositif MTC effectue une authentification réussie avec un côté de réseau, l'ID de groupe et la clé racine de communication de groupe, ou l'ID de service et la clé racine de service à la station de base.

**9.** Entité de gestion de mobilité selon l'une quelconque des revendications 6 à 8, dans laquelle le deuxième module de réception (1830, 1930) est configuré pour recevoir la clé racine de communication de groupe ou la clé racine de service et le nombre aléatoire du HSS ; et
le deuxième module d'envoi (1840, 1940) est configuré en outre pour envoyer le nombre aléatoire à la station de base.

**10.** Entité de gestion de mobilité selon la revendication 9, comprenant en outre :

un second module de liaison (1970), configuré pour lier la clé racine de communication de groupe et le nombre aléatoire à l'ID de groupe et stocker la clé racine de communication de groupe, le nombre aléatoire et l'ID de groupe, ou lier la clé racine de service et le nombre aléatoire à l'ID de service et stocker la clé racine de service, le nombre aléatoire et l'ID de service ; et
un quatrième module d'envoi (1980), configuré pour envoyer, lorsqu'une requête jointe qui achemine l'ID de groupe ou l'ID de service et qui est envoyée par un autre dispositif MTC est reçue, et si le dispositif MTC effectue une authentification réussie avec le côté de réseau, l'ID de groupe, et la clé racine de communication de groupe et le nombre aléatoire qui sont liés à l'ID de groupe à la station de base, ou l'ID de service, et la clé racine de service et le nombre aléatoire qui sont liés à l'ID de service à la station de base.

**11.** Entité de gestion de mobilité selon l'une quelconque des revendications 6 à 10, comprenant en outre :

un troisième module de réception (1990), configuré pour recevoir un paramètre d'authentification de groupe du HSS ; et
un module d'authentification (1992), configuré pour effectuer une authentification avec le dispositif MTC en fonction du paramètre d'authentification de groupe.

**12.** Dispositif de communication de type machine appartenant à un groupe de dispositifs de communication de type machine, MTC, comprenant :

un module d'envoi (2210, 2310), configuré pour envoyer, à une entité de gestion de mobilité, MME, un ID de groupe du groupe ou un ID de service d'un service pris en charge par le dispositif MTC ;
un premier module de réception (2220, 2320), configuré pour recevoir, d'une station de base, un paramètre de génération de clé de groupe ; et
un module de génération (2230, 2330), configuré pour générer la clé de groupe en fonction du paramètre de génération de clé de groupe et une clé de sécurité sauvegardée dans le dispositif MTC, dans lequel la clé de groupe est utilisée pour effectuer une communication de groupe entre les dispositifs MTC et la station de base.

**13.** Dispositif de communication de type machine selon la revendication 12, dans lequel le premier module de réception (2220, 2320) est configuré pour recevoir, dans un processus d'authentification du dispositif MTC, un paramètre d'authentification utilisé pour générer une clé de racine de communication de groupe à partir de la station de base ; ou recevoir un nombre aléatoire de la station de base.

**14.** Dispositif de communication de type machine selon la revendication 12, dans lequel le premier module de réception (2220, 2320) est configuré pour recevoir l'ID de groupe et un nombre aléatoire de la station de base.

**15.** Dispositif de communication de type machine selon l'une quelconque des revendications 12 à 14, comprenant en outre :

un deuxième module de réception (2340), configuré pour recevoir, de la station de base, des informations de mise à jour utilisées pour mettre à jour la clé de groupe, dans lequel la station de base met à jour la clé de groupe lorsqu'un numéro d'hyper-trame, HFN, correspondant à l'ID de groupe atteint un seuil, et tous les dispositifs MTC ayant un ID partagent un même HFN ; et
un premier module de mise à jour (2350), configuré pour mettre à jour la clé de groupe en fonction des informations de mise à jour.

100

Receive, from an MME, a group ID and a group communication root key related to a security key, or a service ID and a service root key related to a security key     S110

Generate a group key corresponding to the group ID according to the group communication root key     S120

Send, to the MTC device, a generating parameter used to generate the group key     S130

FIG. 1

MTC device — MME — HSS

S210: Attach request (IMSI, Group ID)

S220: Authentication data request (IMSI, Group ID)

S230: Find a K according to the IMSI, generate an AV, find a K_Group according to the Group ID and generate an AV_Group according to the K_Group

S240: Authentication data response (AV, AV_Group)

S250: Bind the Group ID with the AV_Group and store the Group ID and the AV_Group

S260: Use the AV and the AV_Group to complete authentication

S270: Calculate a KeNB and a KeNB_Group

eNB

S270: Calculate a KeNB and a KeNB_Group

S280: KeNB, Group ID, KeNB_Group

S290: Select an algorithm and calculate an access stratum key, a Key_Groupenc and a Key_Groupint

S291: AS MSC (integrity algorithm, encryption algorithm, group integrity algorithm, group encryption algorithm)

S292: Calculate the access stratum key, the Key_Groupenc and the Key_Groupint

FIG. 2

FIG. 3

FIG. 4

MTC device                                                              MME

S510: Service request (Group ID, KSI$_{ASME}$_Group)

S520: Check whether a
binding relationship with
the Group ID exists

eNB

S530: Group ID

S540: Search for a bound group
algorithm, Key Count,
KeNB_Group, Key_Groupenc and
Key_Groupint according to the
Group ID

S550: AS MSC (integrity
algorithm, encryption
algorithm, group integrity
algorithm, group encryption
algorithm, Key Count)

S560:Calculate an access
stratum key, a
Key_Groupenc and a
Key_Groupint

FIG. 5

MTC device            MME            HSS

S610: Attach request
(IMSI, Group ID)

S620: Authentication data
request (IMSI, Group ID,
Group Key Indicator)

S630: Find a K according to
the IMSI, find a K_Group
according to the Group ID,
generate an AV_Group
according to the K and the
K_Group, and generate a
Group Key according to the
K_Group and a Nonce

S640: Authentication data response
(AV_Group, Group Key, Nonce)

S650: Bind the Group ID with the Group
Key and the Nonce and store the Group ID,
the Group Key and the Nonce

S660: Use the AV_Group to
complete authentication

S670: Calculate a KeNB

eNB

S670: Calculate a KeNB
and a KeNB_Group

S680: KeNB, Group ID,
KeNB_Group, Nonce

S690: Select an algorithm and
calculate an access stratum
key, a Key_Groupenc and a
Key_Groupint

S691: AS MSC (integrity algorithm, encryption
algorithm, group integrity algorithm, group
encryption algorithm, Nonce)

S692: Calculate an access
stratum key, the
KeNB_Group, the
Key_Groupenc and the
Key_Groupint

FIG. 6

FIG. 7

FIG. 8

MTC device                                                    MME

S910: User authentication request (RAND_Group,
AUTH_Group, KSI$_{ASME}$)

S920: User authentication response (RES_Group)
or user authentication rejection (CAUSE)

FIG. 9

MTC device                                                    MME

S1010: Service request (Group ID, Nonce)

S1020: Check whether
a binding relationship
with the Group ID
exists

eNB

S1030: Group ID

S1040: Search for a bound group
algorithm, Key Count, KeNB_Group,
Key_Groupenc and Key_Groupint
according to the Group ID

S1050: AS MSC (integrity
algorithm, encryption
algorithm, group integrity
algorithm, group encryption
algorithm, Key Count)

S1060: Calculate an access
stratum key, the Key_Groupenc
and the Key_Groupint

FIG. 10

FIG. 11

MTC device                                                                    MME

S1210: Service request (Service ID, Group ID, Nonce)

S1220: Check whether
a binding relationship
with the Service ID
exists

eNB

S1230: Group ID

S1240: Search for a bound group
algorithm, Key Count, KeNB_Group,
Key_Groupenc and Key_Groupint
according to the Group ID

S1250: AS MSC (integrity
algorithm, encryption
algorithm, group integrity
algorithm, group encryption
algorithm, Key Count)

S1260: Calculate an access
stratum key, the Key_Groupenc
and the Key_Groupint

FIG. 12

1300

Receive a group ID sent by an MTC device for a group in
which the MTC device is located, or a service ID of a service
supported by the MTC device                                     S1310

Send the group ID or the service ID to an HSS of the
MTC device                                                     S1320

Receive a group communication root key or a service root
key from the HSS                                               S1330

Send the group ID and the group communication root
key, or the service ID and the service root key to a base
station                                                        S1340

FIG. 13

1400

| Receive, from an MME, a group ID of a group in which an MTC device is located or a service ID of a service supported by the MTC device | S1410 |

| Generate a group communication root key according to a random number and a security key corresponding to the group ID, or generate a service root key according to a random number and a security key corresponding to the service ID | S1420 |

| Send the group communication root key or the service root key to the MME | S1430 |

FIG. 14

1500

| Send, to an MME, a group ID of a group in which an MTC device is located or a service ID of a service supported by the MTC device | S1510 |

| Receive, from a base station, a generating parameter used to generate a group key | S1520 |

| Generate the group key according to the group key generating parameter and a security key saved in the MTC device | S1530 |

FIG. 15

Base station 1600

Receiving module 1610

Generating module 1620

First sending module 1630

FIG. 16

Base station 1700

Receiving module 1710

Generating module 1720

First sending module 1730

Binding module 1740

Second sending module 1750

Updating module 1760

Third sending module 1770

Fourth sending module 1772

Fifth sending module 1774

Sixth sending module 1776

FIG. 17

Mobility management entity 1800

First receiving module 1810

First sending module 1820

Second receiving module 1830

Second sending module 1840

FIG. 18

Mobility management entity 1900

First receiving module 1910

First sending module 1920

Second receiving module 1930

Second sending module 1940

First binding module 1950

Third sending module 1960

Second binding module 1970

Fourth sending module 1980

Third receiving module 1990

Authentication module 1992

Processing module 1994

FIG. 19

Home subscriber system 2000

Receiving module 2010

First generating module 2020

First sending module 2030

FIG. 20

Home subscriber system 2100

Receiving module 2110

First generating module 2120

First sending module 2130

Second generating module 2140

Second sending module 2150

FIG. 21

Machine type communication device 2200

Sending module 2210

First receiving module 2220

Generating module 2230

FIG. 22

Machine type communication device 2300

Sending module 2310

First receiving module 2320

Generating module 2330

Second receiving module 2340

First updating module 2350

Third receiving module 2360

Fourth receiving module 2370

Fifth receiving module 2380

Second updating module 2390

Processing module 2392

FIG. 23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101511082 A